# EUROPEAN PATENT APPLICATION

(11) **EP 4 848 636 A1**
(43) Date of publication of application: **02.12.2026**
(21) Application number: 24921467.7
(22) Date of filing: 26.09.2024
(51) Int. Cl.: H04L 5/00, H04W 72/04

(54) **COMMUNICATION METHOD AND APPARATUS, AND STORAGE MEDIUM**

(30) Priority: 02.02.2024 CN 202410157001
(71) Applicant: ZTE CORPORATION, Shenzhen, Guangdong 518057 (CN)
(72) Inventor: HU, Youjun, Shenzhen, Guangdong 518057 (CN); DAI, Bo, Shenzhen, Guangdong 518057 (CN); CHEN, Mengzhu, Shenzhen, Guangdong 518057 (CN); XU, Jun, Shenzhen, Guangdong 518057 (CN); DAI, Jianqiang, Shenzhen, Guangdong 518057 (CN); XU, Jiajun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/121501
(87) International publication number: WO 2025/161443

(57) **Abstract**

The present disclosure relates to the technical field of communications. Provided in the embodiments are a communication method and apparatus, and a storage medium. The method comprises: receiving configuration information of a first reference signal; and processing the first reference signal on the basis of the configuration information of the first reference signal.

## Description

### CROSS-REFERENCE TO RELATED APPLICATIONS

This application claims priority to the Chinese patent application No. 202410157001.0 filed with the CNIPA on February 2, 2024, and entitled "COMMUNICATION METHOD AND APPARATUS, AND STORAGE MEDIUM", the entire content of which is incorporated herein by reference.

### TECHNICAL FIELD

The present disclosure relates to the technical field of communications, in particular to a communication method and apparatus, and a storage medium.

### BACKGROUND

In wireless communication, signals are affected by various factors during transmission, such as a multipath effect and channel fading. These factors may cause changes in amplitude, phase, and frequency of the signals. In order to better process, demodulate, and decode the signals, optimize the communication performance, and improve the communication system capacity and security, a terminal needs to process the signals, for example, performing channel estimation on the signals. Currently, reference signals have poor flexibility, resulting in large system overhead. Moreover, the terminal cannot select reference signals according to real-time conditions, which affects the performance of reference signals.

### SUMMARY

Embodiments of the present disclosure provide a communication method and apparatus, and a storage medium, for improving signal processing performance or reducing overhead.

In order to achieve the above objectives, the present disclosure employs the following technical solutions.

In a first aspect, a communication method is provided, performed by a first node. The method includes: receiving configuration information of a first reference signal; and processing the first reference signal based on the configuration information of the first reference signal.

In a second aspect, a communication method is provided, performed by a second node. The method includes: sending configuration information of a first reference signal; and processing the first reference signal based on the configuration information of the first reference signal.

In a third aspect, a communication apparatus is provided, applied to a first node. The apparatus includes: a receiving unit, configured to receive configuration information of a first reference signal; and a processing unit, configured to process the first reference signal based on the configuration information of the first reference signal.

In a fourth aspect, a communication apparatus is provided, applied to a second node. The apparatus includes: a sending unit, configured to send configuration information of a first reference signal; and a processing unit, configured to process the first reference signal based on the configuration information of the first reference signal.

In a fifth aspect, a communication apparatus is provided, including: a processor and a memory; wherein the memory and the processor are coupled; the memory is configured to store processor-executable instructions, and the memory stores the processor-executable instructions; and the processor, when configured to execute the instructions, cause the communication apparatus to implement the method as described in any one of the first aspect or the second aspect mentioned above.

In a sixth aspect, a computer-readable storage medium is provided. The computer-readable storage medium stores computer instructions, and the computer instructions, when running on a computer, cause the computer to perform the method provided by any one of the first aspect or the second aspect.

In a seventh aspect, a computer program product including computer instructions is provided, and the computer instructions, when running on a computer, cause the computer to perform the method provided by any one of the first aspect or the second aspect.

### BRIEF DESCRIPTION OF DRAWING(S)

The accompanying drawings are intended to provide further understanding of the technical solutions of the present application, constitute a part of the specification, and are used to explain the technical solutions of the present application together with embodiments of the present disclosure, but do not constitute a limitation to the technical solutions of the present application.
FIG. 1 is a schematic structural diagram of a DMRS of a PDSCH in 5G provided by embodiments of the present disclosure.
FIG. 2 is a schematic structural diagram of another DMRS of a PDSCH in 5G provided by embodiments of the present disclosure.
FIG. 3 is a schematic configuration diagram of a DMRS provided by embodiments of the present disclosure.
FIG. 4 is a schematic configuration diagram of another DMRS provided by embodiments of the present disclosure.
FIG. 5 is a schematic structural diagram of a DMRS of a PDCCH provided by embodiments of the present disclosure.
FIG. 6 is a schematic structural diagram of a communication system provided by embodiments of the present disclosure.
FIG. 7 is a schematic flowchart of a communication method provided by embodiments of the present disclosure.
FIG. 8 is a schematic structural diagram of a first reference signal provided by embodiments of the present disclosure.
FIG. 9 is a schematic diagram of determining a pattern of a second reference signal according to a pattern of a first reference signal provided by embodiments of the present disclosure.
FIG. 10 is another schematic diagram of determining a pattern of a second reference signal according to a pattern of a first reference signal provided by embodiments of the present disclosure.
FIG. 11 is a schematic configuration diagram of another DMRS provided by embodiments of the present disclosure.
FIG. 12 is a schematic configuration diagram of another DMRS provided by embodiments of the present disclosure.
FIG. 13 is a schematic diagram of third indication information provided by embodiments of the present disclosure.
FIG. 14 is a schematic configuration diagram of another DMRS provided by embodiments of the present disclosure.
FIG. 15 is a schematic configuration diagram of another DMRS provided by embodiments of the present disclosure.
FIG. 16 is a schematic diagram of a predefined resource provided by embodiments of the present disclosure.
FIG. 17 is a schematic diagram of two resource configurations provided by embodiments of the present disclosure.
FIG. 18 is a schematic diagram of a training resource and a feedback resource provided by embodiments of the present disclosure.
FIG. 19 is a schematic flowchart of another communication method provided by embodiments of the present disclosure.
FIG. 20 is a schematic composition diagram of a communication apparatus provided by embodiments of the present disclosure.
FIG. 21 is a schematic composition diagram of another communication apparatus provided by embodiments of the present disclosure.
FIG. 22 is a schematic structural diagram of a communication apparatus provided by embodiments of the present disclosure.

### DETAILED DESCRIPTION

The technical solutions in the embodiments of the present disclosure will be described below clearly and completely with reference to the accompanying drawings in the embodiments of the present disclosure. Apparently, the described embodiments are merely some rather than all of the embodiments of the present disclosure. On the basis of the embodiments in the present disclosure, all other embodiments obtained by those ordinarily skilled in the art without inventive efforts fall within the scope of protection of the present disclosure.

Unless the context otherwise requires, throughout the specification and claims, the term "comprise" and its other forms, such as the third-person singular form "comprises" and the present participle form "comprising," are to be construed as open and inclusive, i.e., "including, but not limited to." In the description of the specification, the terms "one embodiment," "some embodiments," "exemplary embodiments," "example," "specific example," or "some examples" are intended to indicate that a particular feature, structure, material, or characteristic related to that embodiment or example is included in at least one embodiment or example of the present disclosure. The schematic representations of the above terms do not necessarily refer to the same embodiment or example. Furthermore, the particular features, structures, materials, or characteristics may be included in any one or more embodiments or examples in any suitable manner.

The terms "first" and "second" are only configured to describe the purpose, and cannot be understood as indicating or implying relative importance or implicitly indicating the quantity of the indicated technical features. Therefore, the features defined as "first" and "second" may explicitly or implicitly include one or more of such features. In the description of the present disclosure, unless otherwise noted, the meaning of "a plurality of" is two or more.

In the embodiment of the present disclosure, a word "exemplary" or "for example" is used to represent being an example, example illustration or description. Any embodiment or design solution described as "exemplary" or "for example" in the embodiment of the present disclosure should not be explained being more preferred or having more advantages than other embodiments or design solutions. Exactly speaking, the word "exemplary" or "for example" is used to be aimed at present the relevant concept in a concrete manner.

Additionally, the use of "based on" implies openness and inclusiveness, because a process, step, calculation, or other action "based on" one or more of the described conditions or values may, in practice, be based on additional conditions or values beyond those described.

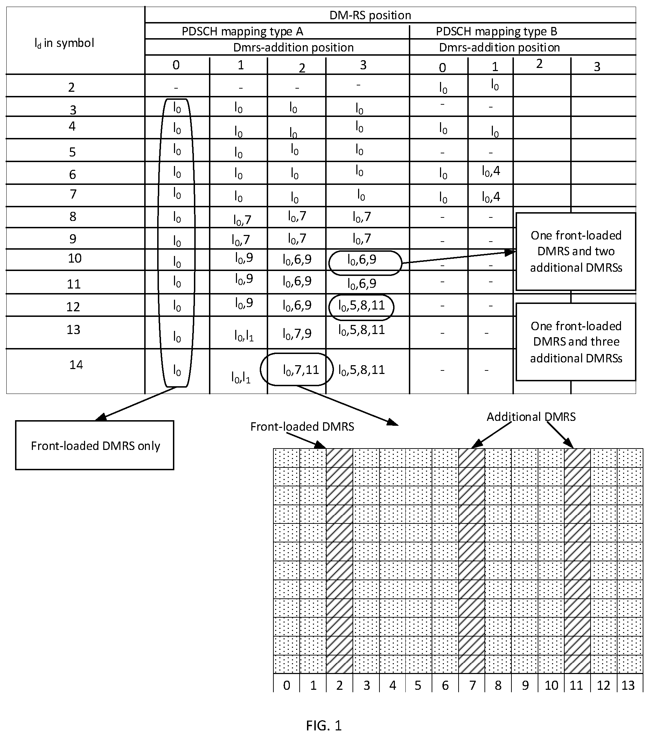

With the continuous development of communication technology, from the second generation of mobile communication technology to the fifth generation of mobile communication technology, the performance and efficiency of a communication system have been significantly improved. However, as people's communication demands continue to grow, an existing communication technology can no longer meet the increasingly complex communication demands. Especially in urban environments, high-rise buildings, dense populations, and diverse service requirements pose significant challenges to communication. Therefore, to meet future communication demands, a communication method oriented toward the 6th-generation mobile communication technology (6G) urgently needs to be proposed and implemented. Taking Table 7.4.1.1.2-3: physical downlink shared channel (PDSCH) demodulation reference signal (DMRS) positions for single-symbol DM-RS (PDSCH DM-RS positions for single-symbol DM-RS) in an existing communication protocol as an example, FIG. 1 is a schematic structural diagram of a DMRS of a PDSCH in a 5th-generation mobile communication technology (5G) provided by embodiments of the present disclosure. Referring to FIG. 1, DM-RS positions include a PDSCH time-domain resource mapping type A (also PDSCH mapping type A) and a PDSCH time-domain resource mapping type B (also PDSCH mapping type), and type A and type B each includes a Dmrs-Addition Position. As can be seen from FIG. 1, in a case where Dmrs-Addition Position in mapping type A is 0, there is only a front-loaded DMRS; in a case where Dmrs-Addition Position is 3 and symbols are 10, there is one front-loaded DMRS and two additional DMRSs; and in a case where Dmrs-Addition Position is 3 and symbols are 12, there is one front-loaded DMRS and three additional DMRSs. In a case where Dmrs-Addition Position is 2 and symbols are 14, still referring to FIG. 1, it can be seen that there is one column of front-loaded DMRS and two columns of additional DMRSs.

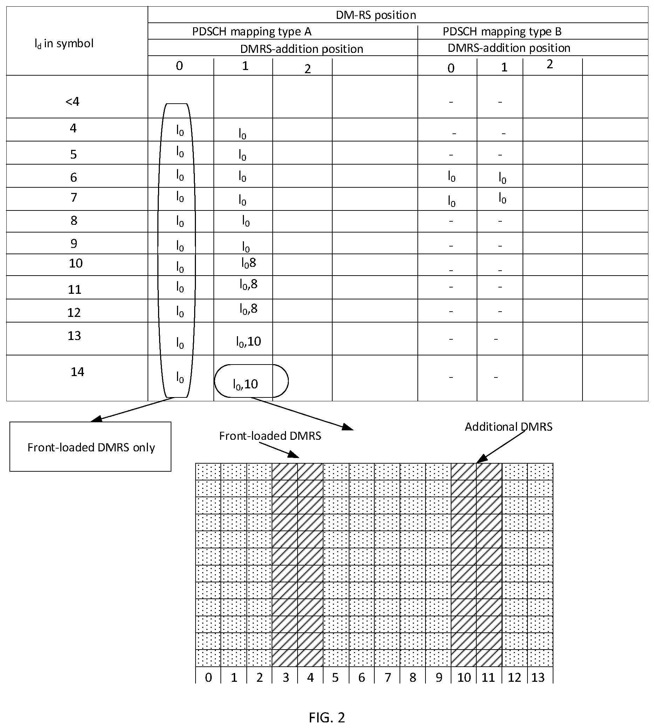

Taking Table 7.4.1.1.2-4: PDSCH DM-RS positions for single-symbol DM-RS in an existing communication protocol as an example, FIG. 2 is a schematic structural diagram of another DMRS of a PDSCH in 5G provided by embodiments of the present disclosure. Referring to FIG. 2, in a case where Dmrs-Addition Position in mapping type A is 0, there is only a front-loaded DMRS; and in a case where Dmrs-Addition Position is 1 and symbols are 14, it can be seen that there are two columns of front-loaded DMRSs and two columns of additional DMRSs.

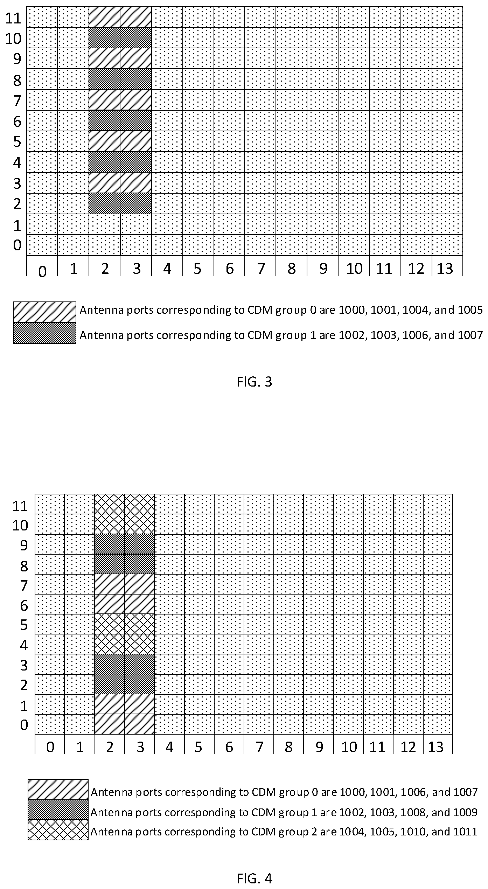

FIG. 3 is a schematic configuration diagram of a DMRS provided by embodiments of the present disclosure. A configuration of the DMRS in FIG. 3 is Configuration type 1, and double-symbol DMRS. Referring to FIG. 3, antenna ports corresponding to code division multiplexing group (CDM group) 0 are 1000, 1001, 1004, and 1005, and antenna ports corresponding to CDM group 1 are 1002, 1003, 1006, and 1007. FIG. 4 is a schematic configuration diagram of another DMRS provided by embodiments of the present disclosure. A configuration of the DMRS in FIG. 4 is Configuration type 2, and double-symbol DMRS. Referring to FIG. 4, antenna ports corresponding to CDM group 0 are 1000, 1001, 1006, and 1007; antenna ports corresponding to CDM group 1 are 1002, 1003, 1008, and 1009; and antenna ports corresponding to CDM group 2 are 1004, 1005, 1010, and 1011.

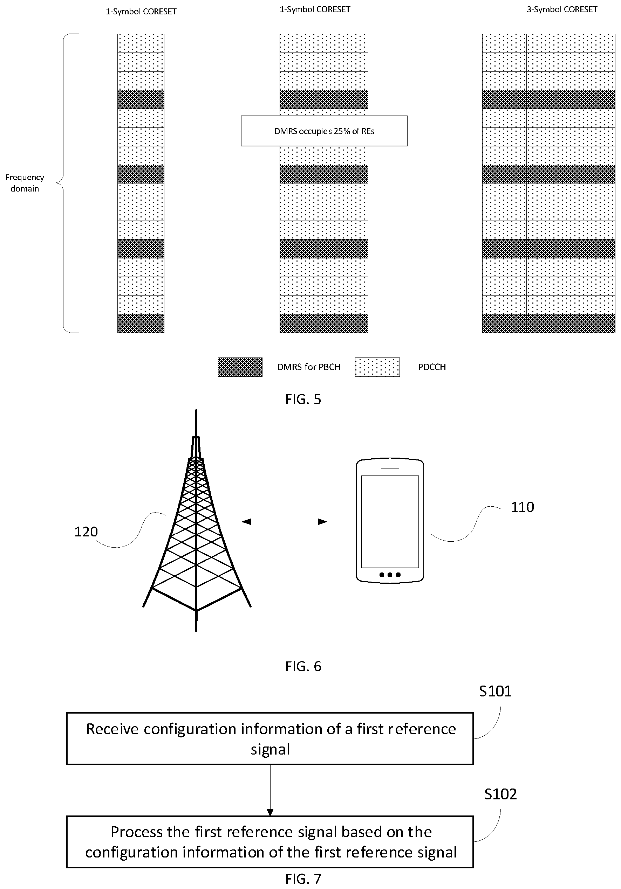

FIG. 5 is a schematic structural diagram of a DMRS of a physical downlink control channel (PDCCH) provided by embodiments of the present disclosure. Referring to FIG. 5, in a frequency domain, a 1-symbol control information resource set (CORESET), a 1-symbol CORESET, and a 3-symbol CORESET are included. As can be seen from FIG. 5, the DMRS occupies 25% of resource elements (REs), as indicated by "DMRS Occupy 25% of REs" in FIG. 5.

It can be seen from the above FIG. 1 to FIG. 5 that a current configuration of the DMRS is not flexible enough, resulting in relatively large resource overhead and limited flexibility. In the context of 6G, how to improve the flexibility of signal processing, reduce reference signal overhead, and provide sufficient flexibility is an urgent problem to be solved.

Based on this, embodiments of the present disclosure provide a communication method and apparatus, and a storage medium. A first reference signal is processed based on configuration information of the first reference signal, so that configuration of the first reference signal is more flexible, helping to improve performance of signal processing by a first node, reduce reference signal overhead, and provide sufficient flexibility.

The solutions of the embodiments of the present disclosure are introduced below with reference to the accompanying drawings.

The technical solutions provided in the embodiments of the present disclosure may be applied to various mobile communication networks, for example, a new radio (NR) mobile communication network using 5th generation mobile communication technology (5G), a future mobile communication network (6G wireless communication system), or a variety of communication convergence systems, etc., which are not limited in the embodiments of the present disclosure.

In some embodiments, the technical solutions provided in the embodiments of the present disclosure may be applied to channel estimation oriented to 6G.

FIG. 6 shows a schematic structural diagram of a communication system provided by embodiments of the present disclosure. As shown in FIG. 6, the communication system includes, but is not limited to, a first node 110 and a second node 120. Wireless signals can be transmitted, received and interacted between the first node 110 and the second node 120.

In a wireless communication scenario, the first node 110 communicates with the second node 120 via a wireless channel. For example, the first node 110 is a terminal, the second node 120 is a base station, and the terminal communicates with the base station via a wireless channel. For another example, the first node 110 is a terminal, the second node 120 is a wireless router, and the wireless router communicates with the terminal via a wireless channel. For another example, the first node 110 is a first base station, the second node 120 is a second base station, and the first base station communicates with the second base station via a wireless channel. For another example, the first node 110 is a first terminal, the second node 120 is a second terminal, and the first terminal communicates with the second terminal via a wireless channel. For another example, the first node 110 is a repeater, the second node 120 is a base station, and the base station communicates with the repeater via a wireless channel. For another example, the first node 110 is a terminal, the second node 120 is a repeater, and the repeater communicates with the terminal via a wireless channel. For another example, the first node 110 is a first repeater, the second node 120 is a second repeater, and the first repeater communicates with the second repeater via a wireless channel. For another example, the first node 110 is a base station, the second node 120 is a satellite, and the satellite communicates with the base station via a wireless channel. For another example, the first node 110 is a satellite, the second node 120 is a base station, and the base station communicates with the satellite via a wireless channel. For another example, the first node 110 is a terminal, the second node 120 is a satellite, and the satellite communicates with the terminal via a wireless channel. For another example, the first node 110 is a satellite, the second node 120 is a terminal, and the terminal communicates with the satellite via a wireless channel. For another example, the first node 110 is a ground device, the second node 120 is an aircraft, and the aircraft communicates with the ground device via a wireless channel. For another example, the first node 110 is a first aircraft, the second node 120 is a second aircraft, and the first aircraft communicates with the second aircraft via a wireless channel.

In the present disclosure, "first" node, "second" node, "first" manner, "second" manner, "first" method, "second" method, "first" matrix, "second" matrix, "first" part, "second" part, unless otherwise specified, are only used for descriptive distinction and do not represent order or sequence.

In the embodiments of the present disclosure, the first node and the second node may also have other names. For example, the first node may also be referred to as a first communication node, and the second node may also be referred to as a second communication node, which are not limited in the embodiments of the present disclosure.

In some embodiments, the above base station may be any node of an evolution node B (eNB), a generation node B (gNB), a transmission receive point (TRP), a transmission point (TP), a relay node, a reconfigurable intelligent surface, and some other access nodes. According to a size of a service coverage area provided, a base station may be further classified into a macro base station for providing a macro cell, a pico base station for providing a pico cell, and a femto base station for providing a femto cell. With the continuous evolution of the wireless communication technology, future base stations may also adopt other names.

In some embodiments, the above terminal may be a device with a wireless transceiver function, such as a mobile phone, a tablet computer, a wearable device, a vehicle-mounted device, an augmented reality (AR)/virtual reality (VR) device, a laptop computer, an ultra-mobile personal computer (UMPC), a netbook, a personal digital assistant (PDA), an Internet of Things (IoT) terminal, or the like. The embodiments of the present disclosure do not limit a specific type of the terminal.

It should be understood that FIG. 6 is an exemplary structural diagram, and the number of devices included in the communication system shown in FIG. 6 is not limited, for example, the number of the first nodes and the second nodes is not limited. Moreover, in addition to the devices shown in FIG. 6, the communication system shown in FIG. 6 may also include other devices, which is not limited herein.

Next, as shown in FIG. 7, embodiments of the present disclosure provide a communication method. The method is performed by a first node, and the first node may be the first node 110 shown in FIG. 6. The method includes the following steps.

At step S101, configuration information of a first reference signal is received.

At step S102, the first reference signal is processed based on the configuration information of the first reference signal.

In some embodiments, to improve the performance of signal processing by a first node, a second node sends the configuration information of the first reference signal. Correspondingly, the first node receives the configuration information of the first reference signal from the second node. The second node may be the second node 120 shown in FIG. 6 above. For ease of description, the following description is uniformly based on an example where the first node is a terminal and the second node is a base station.

In some embodiments, the first reference signal is a DMRS.

In some embodiments, the first reference signal may also be a measurement reference signal (MRS) or an interfering measurement reference signal (IMRS).

In some embodiments, the first reference signal includes a positioning reference signal, a synchronization signal, a sounding reference signal, a phase tracking reference signal, a channel state measurement (CSI) reference signal, an interfering measurement reference signal, and a remote interference management (RIM) reference signal. The synchronization signal includes a primary synchronization signal (PSS), a secondary synchronization signal (SSS), and a low power synchronization signal (LP-SS), among others.

In some embodiments, processing of the first reference signal includes receiving, detecting, transmitting, sending, training, monitoring, and inferring. Exemplarily, for processing the first reference signal, the first node may receive or detect the first reference signal, or may train, monitor, or infer the first reference signal to obtain other reference signals.

In some embodiments, the configuration information of the first reference signal includes a position of a resource element of the first reference signal, and the resource element includes a first resource element and a second resource element. The first resource element is used for carrying a non-zero-power first reference signal, and the second resource element is used for carrying a zero-power first reference signal; or, the first resource element and the second resource element are used for carrying the non-zero-power first reference signal; or, the first resource element is used for transmitting a data channel and the first reference signal, and the second resource element is used for transmitting the first reference signal, i.e., the first reference signal and the data channel may multiplex the same RE; or, a port corresponding to the first resource element is the same as a port corresponding to a data channel, and a port corresponding to the second resource element is different from the port corresponding to the data channel; or, a position of the second resource element is determined according to a position of the first resource element; or, the position of the second resource element is a subset of the position of the first resource element; or, the position of the second resource element does not overlap with the position of the first resource element; or, the position of the first resource element and the position of the second resource element are consecutive in a time domain or consecutive in a frequency domain; or, the number of the second resource elements is determined according to the number of the first resource elements; or, a sum of the number of the second resource elements and the number of the first resource elements is a specific value; or, the number of the second resource elements is proportional to the number of the first resource elements. The proportion may include at least one of the following: 1/2, 1/3, or 1/4. In some embodiments, the data channel includes a physical shared channel, a downlink physical shared channel, an uplink physical shared channel, a downlink data channel, and an uplink data channel.

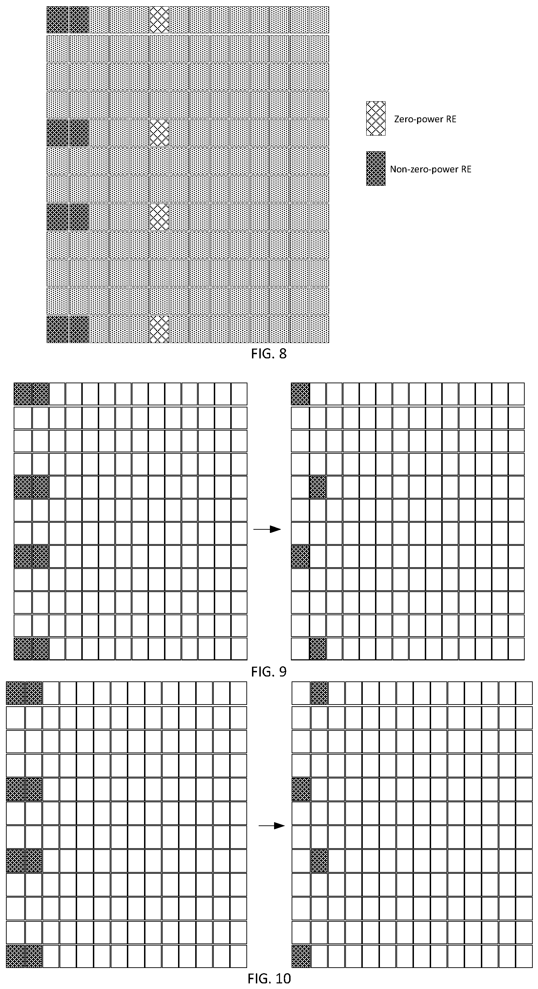

Taking an example where the first resource element is used for carrying the non-zero-power first reference signal and the second resource element is used for carrying the zero-power first reference signal, exemplarily, FIG. 8 shows a schematic structural diagram of a first reference signal provided by embodiments of the present disclosure. Referring to FIG. 8, the first reference signal includes the zero-power RE (i.e., the second resource element) and the non-zero-power RE (i.e., the first resource element). In FIG. 8, Zero power RE represents the zero-power RE, and Non-Zero power RE represents the non-zero-power RE. It should be understood that a current structure of the DMRS is divided into two types: one type is entirely composed of non-zero-power REs, and the other type is entirely composed of zero-power REs, and they have different uses. Therefore, the technical solution of the embodiment of the present disclosure proposes that the first resource element is used for carrying the non-zero-power first reference signal, and the second resource element is used for carrying the zero-power first reference signal, so that based on one reference signal, the first node can achieve multiple functions. Thus, overhead of the second node and reception power consumption of the first node are reduced.

As an example, the configuration information of the first reference signal includes a first parameter and a second parameter, the first parameter is used for determining the position of the first resource element, and the second parameter is used for determining the position of the second resource element. Exemplarily, the first parameter is used for determining a time-domain position and a frequency-domain position of the first resource element, and the second parameter is used for determining a time-domain position and a frequency-domain position of the second resource element. The time-domain position may be based on a slot, and the frequency-domain position may be based on a resource block (RB).

In some embodiments, an offset exists between power of the first resource element and power of the second resource element; or, the power of the second resource element is obtained according to the power of the first resource element; or, the power of the first resource element is associated with the power of the second resource element.

In some embodiments, the position of the second resource element is determined according to the second parameter and the first parameter; or, the second parameter is associated with the first parameter.

In some embodiments, the first parameter and the second parameter are configured based on different signaling. As a possible example, the first parameter is a parameter configured by RRC, and the second parameter is a parameter determined by DCI or MAC CE. As another possible example, the first parameter is a parameter configured by RRC, and the second parameter is a parameter configured by RRC.

As another example, the configuration information of the first reference signal includes a third parameter and a fourth parameter, the third parameter is used for indicating the position of the resource element of the first reference signal, and the fourth parameter is used for indicating the position of the first resource element or the position of the second resource element. Exemplarily, the third parameter is used for determining time-domain positions and frequency-domain positions of all resource elements of the first reference signal; and the fourth parameter is used for determining a time-domain position and a frequency-domain position of the first resource element, or is used for determining a time-domain position and a frequency-domain position of the second resource element.

As another example, the configuration information of the first reference signal includes a fifth parameter and a sixth parameter, the fifth parameter is used for indicating the position of the resource element of the first reference signal, and the sixth parameter is used for indicating at least one of the following of the first reference signal: a function, a usage, or a type.

As an example, the function or the usage includes being used for demodulation, positioning, synchronization, channel sounding, phase tracking, channel measurement, interference measurement, remote interference management, training, monitoring, and inference. The type includes a reference signal type based on different functions or usages, or a type of different patterns.

As another example, the configuration information of the first reference signal includes a pattern of the first reference signal, and the pattern of the first reference signal is used for indicating a position of a resource element of the first reference signal. The pattern of the first reference signal includes a first pattern and/or a second pattern. It should be noted that, in the embodiments of the present disclosure, "indicating" may be replaced with "determining". For example, "the pattern of the first reference signal is used for indicating the position of the resource element of the first reference signal" may be replaced with "the pattern of the first reference signal is used for determining the position of the resource element of the first reference signal". "Indicating" and "determining" may refer to the same concept.

As an example, the position of the resource element includes a time-domain position, a frequency-domain position, and a spatial-domain position. The time-domain position includes at least one of a starting symbol position in a time domain, the number of symbols, a position of a symbol, an interval, or a duration. The frequency-domain position includes at least one of a starting position of an RB/RE in the frequency domain, the number of RBs/REs, or an interval. The spatial-domain position includes a beam direction, a beam index, the number of beams, a position of each beam in the time domain, a port number, or the like.

In some embodiments, a position of a resource element of the first pattern is used for transmitting a data channel and the first reference signal, and a position of a resource element of the second pattern is used for transmitting the first reference signal, that is, the data channel and the first reference signal may multiplex the position of the resource element of the first pattern; or, the first pattern and the second pattern are used for carrying a non-zero-power first reference signal; or, the first pattern is used for transmitting the data channel and the first reference signal, and the second pattern is used for transmitting the first reference signal, that is, the data channel and the first reference signal may multiplex the first pattern; or, a position of a second resource element determined by the second pattern is a subset of a first resource element determined by the first pattern; or, the position of the second resource element determined by the second pattern does not overlap with a position of the first resource element determined by the first pattern; or, the position of the first resource element determined by the first pattern and the position of the second resource element determined by the second pattern are consecutive in a time domain or consecutive in a frequency domain.

From the above content, it can be seen that different patterns may have different functions. For example, some patterns include only zero-power resource elements, some patterns include only non-zero-power resource elements, and some patterns include the zero-power resource elements and the non-zero-power resource elements.

In some embodiments, in a case where the configuration information of the first reference signal includes the pattern of the first reference signal, after receiving the configuration information of the first reference signal, the first node may further receive first indication information from the second node. The first indication information is used for activating or deactivating the pattern of the first reference signal; or, the first indication information is used for activating, deactivating, or determining a resource element subset of the pattern of the first reference signal; or, the first indication information is used for activating, deactivating, or determining signal transmission or channel transmission based on the pattern of the first reference signal; or, the pattern of the first reference signal includes multiple patterns, and the first indication information is used for activating, deactivating, or determining at least one pattern among the patterns of the first reference signal.

It should be understood that different patterns may have different functions, and the functions include positioning, demodulation, or the like. Uplink and downlink may have different patterns. For example, an uplink PUSCH has a corresponding DMRS pattern, and a downlink PDSCH has a corresponding DMRS pattern, which may be the same or may be different.

In some embodiments, in a case where the configuration information of the first reference signal includes the pattern of the first reference signal, after receiving the configuration information of the first reference signal, the first node may determine a pattern of a second reference signal according to the pattern of the first reference signal; or, the first node receives second indication information from the second node, and the second indication information is used for determining the pattern of the second reference signal. The pattern of the second reference signal is a subset of the pattern of the first reference signal; or, the pattern of the first reference signal is a subset of the pattern of the second reference signal; or, the pattern of the first reference signal and the pattern of the second reference signal partially overlap, or are consecutive in a time domain, or are consecutive in a frequency domain; or, the pattern of the first reference signal is associated with the pattern of the second reference signal.

For example, taking the pattern of the second reference signal being the subset of the pattern of the first reference signal as an example, determining the pattern of the second reference signal according to the pattern of the first reference signal may include that resource elements retained in the pattern of the first reference signal are determined based on the pattern of the first reference signal, and the resource elements retained in the pattern of the first reference signal are used as the pattern of the second reference signal. In some cases, a starting RE, an interval, and an offset of the pattern of the first reference signal are determined. Exemplarily, FIG. 9 shows a schematic diagram of determining the pattern of the second reference signal according to the pattern of the first reference signal provided by embodiments of the present disclosure. Referring to FIG. 9, assuming that the starting RE of the pattern of the first reference signal is a first RE, the interval is one RE, and the offset is one RE, and then the above REs are retained so as to obtain the pattern of the second reference signal.

For another example, taking the pattern of the second reference signal being the subset of the pattern of the first reference signal as an example, determining the pattern of the second reference signal according to the pattern of the first reference signal may include that resource elements to be removed from the pattern of the first reference signal are determined based on the pattern of the first reference signal, and then the resource elements to be removed from the pattern of the first reference signal are removed to obtain the pattern of the second reference signal. In some cases, a starting RE, an interval, and an offset of the pattern of the first reference signal are determined. Exemplarily, FIG. 10 shows another schematic diagram of determining the pattern of the second reference signal according to the pattern of the first reference signal provided by embodiments of the present disclosure. Referring to FIG. 10, assuming that the starting RE of the pattern of the first reference signal is a first RE, the interval is one RE, and the offset is one RE, and then the above REs are removed so as to obtain the pattern of the second reference signal.

In some embodiments, the pattern of the first reference signal may have the following several configurations.

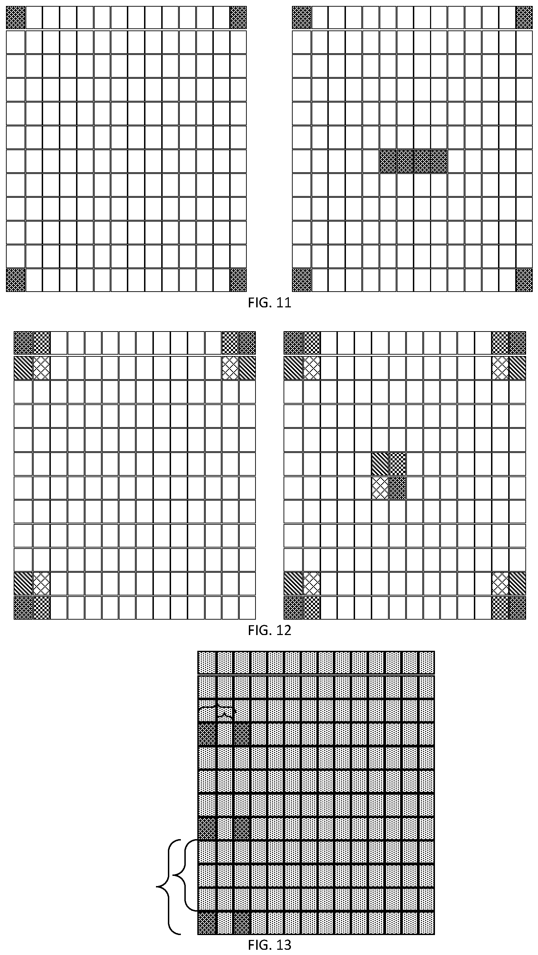

Configuration 1: DMRSs are placed at corner positions of a resource. Exemplarily, it may be as shown on a left side of FIG. 11. Alternatively, the DMRSs are placed at the corner positions of the resource and have a symmetrical relationship. Exemplarily, it may be as shown on a right side of FIG. 11.

Configuration 2: In a case where a coherence time and a coherence bandwidth are the maximal, pilot frequencies are placed at an angle or next to the corners. Exemplarily, it may be as shown in FIG. 12.

Configuration 3: the numbers of REs placed in different subbands are different. A small number of REs are placed in a low frequency, and a larger number of REs are placed in a high frequency.

In some embodiments, the first reference signal or the second reference signal is used for at least one of the following: training, monitoring, inference, data transmission or reception, control channel transmission, reception, or detection, or measurement.

As another example, the configuration information of the first reference signal includes third indication information, and the third indication information is used for indicating at least one of the following: a starting position of the first reference signal, a frequency-domain interval, a time-domain interval, the sequence length of the first reference signal, a sequence type of the first reference signal, the number of time-domain resources of the first reference signal, or the number of frequency-domain resources of the first reference signal; wherein the starting position of the first reference signal includes a frequency-domain starting position and a time-domain starting position. The frequency-domain starting position may be a subcarrier, and the time-domain starting position may be a symbol position. The frequency-domain interval includes a frequency-domain interval parameter or a parameter used for determining the frequency-domain interval, and the time-domain interval includes a time-domain interval parameter or a parameter used for determining the time-domain interval. The sequence length may be used for determining an ending position of the first reference signal.

In some embodiments, the third indication information may further be used for indicating the number of symbols, and the number of symbols may also be used for determining the ending position of the first reference signal.

Exemplarily, FIG. 13 is a schematic diagram of third indication information provided by embodiments of the present disclosure. Referring to FIG. 13, the third indication information indicates that the frequency-domain interval of the first reference signal is 3 or 4, the time-domain interval is 1 or 2, the sequence length of the first reference signal is 6, and the number of symbols is 2. It may be determined that the starting position of the first reference signal is an RE at the lower-left corner in FIG. 13.

In some embodiments, the third indication information includes at least one of the following: first bitmap information, wherein the first bitmap information is used for indicating the frequency-domain starting position, the frequency-domain interval, and the number of the frequency-domain resources; second bitmap information, wherein the second bitmap information is used for indicating the time-domain starting position, the time-domain interval, and the number of the time-domain resources; or pattern index indication information, wherein a pattern index may be a pattern index within a physical resource block (PRB), or a pattern index of the first reference signal, and the pattern index indication information includes a target channel bandwidth occupied by the first reference signal.

Exemplarily, the first bitmap information indicates the frequency-domain resources, including the frequency-domain starting position and a number of resources in a frequency domain, such as the number of RBs and the number of RBGs. The second bitmap information indicates the time-domain resources, including the time-domain starting position and the number of resources in a time domain, such as the number of the symbols, the number of slots, and the number of repetitions. The pattern index information is used for determining one index, and this index points to or is associated with one pattern, which is used for determining the position of the resource element of the first reference signal.

In some embodiments, the third indication information may further include at least one of the following: an identifier of the pattern of the first reference signal, power, a port, a starting position, a time-frequency interval, a sequence identifier of the first reference signal, an optical orthogonal code (OOC) length, an indication of a PRB and an indication within the PRB, a quasi co-location (QCL) relationship, interference strength, or interference distribution. The OOC length is used for determining the number of REs occupied.

As a possible example, the position of the resource element of the first reference signal or the pattern of the first reference signal is determined based on at least one of the following: a time-domain resource; a frequency-domain resource; a subcarrier interval; a frequency point position; carrier information; cell information; a time-domain position; antenna port information; a transmission manner of a data channel; whether data is transmitted on the position of the resource element of the first reference signal; a usage of the first reference signal, wherein the usage includes training, monitoring or inference; or a first specific condition, wherein the first specific condition is based on (includes) at least one of the following: a threshold value; a parameter value; mobility; stationary; a non-acknowledgement (NACK) message; deactivation signaling; or a timer.

That is to say, the first specific condition includes at least one of the following: whether the threshold value is satisfied; whether the parameter value is satisfied; whether the mobility is satisfied; whether the stationary is satisfied; whether the NACK message is fed back or sent; whether the deactivation signaling is received; or whether the timer expires.

In some embodiments, the antenna port information includes: the number of antenna ports; an antenna port number or index; or an antenna port type.

In some embodiments, a time node and the above time-domain position are the same, both being used for determining at least one time-domain position. The time node or the time-domain position includes at least one of the following information: a starting time point, a reference time point, a time period, an ending time point, a period, or an offset. The time node or the time-domain position is defined based on a time unit, such as a millisecond, a microsecond, a second, a symbol, a slot, a subframe, a radio frame, a superframe, or a basic time unit T.

In some embodiments, the cell information includes at least one of the following information: serving cell information, secondary cell (SCell) information, a cell identity, a neighboring cell, an intra-frequency cell, an inter-frequency cell, a virtual cell, a physical cell identity (PCI), or a list based on the above information.

In some embodiments, data is transmitted on the position of the resource element of the first reference signal or not correspond to different patterns or positions of the resource element of the first reference signal.

In some embodiments, a first node may determine or correspond to different patterns or positions of the resource element of the first reference signal according to the usage of the first reference signal.

In some embodiments, after receiving the configuration information of the first reference signal, the first node may process the first reference signal based on the configuration information of the first reference signal. The first node processing the first reference signal may mean that the first node receives the first reference signal.

For example, taking an example where the configuration information of the first reference signal includes the position of the resource element of the first reference signal, the first node processing the first reference signal based on the configuration information of the first reference signal may mean that the first node receives the first reference signal at the corresponding position based on the position of the resource element of the first reference signal included in the configuration information of the first reference signal.

For another example, taking an example where the configuration information of the first reference signal includes the pattern of the first reference signal, the first node processing the first reference signal based on the configuration information of the first reference signal may mean that the first node determines the number of resource elements of the first reference signal based on the pattern of the first reference signal, and then receives the first reference signal based on the number of the resource elements of the first reference signal, the pattern of the first reference signal, and a preset rule.

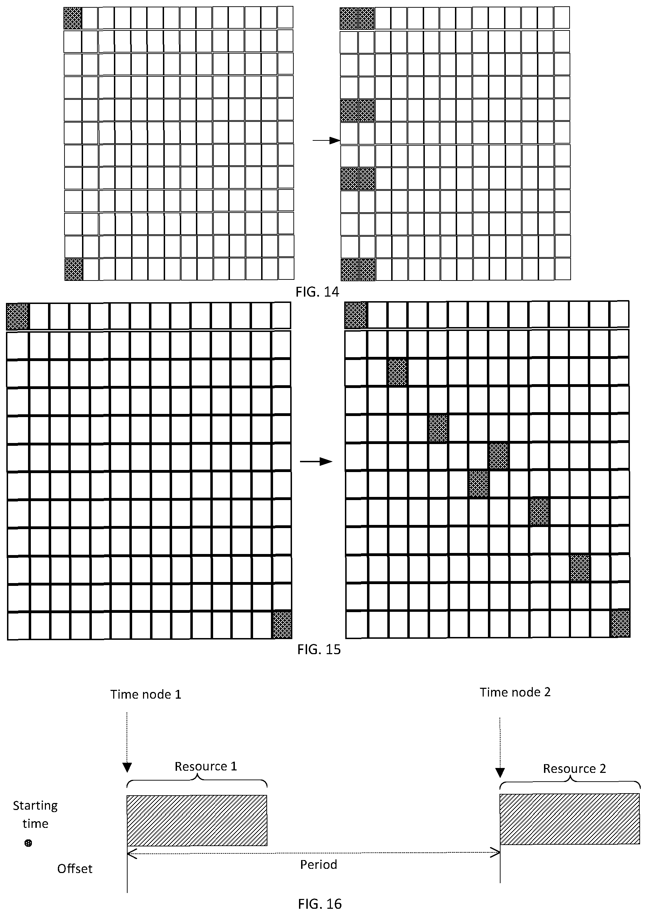

As a possible example, the preset rule includes: frequency domain first, then time domain. For example, the frequency domain may be filled with X REs, and then shifting and/or copying may be performed in the time domain. Exemplarily, as shown in FIG. 14, copying is performed in the time domain. The number of the REs is 8. When the number of the REs is 4, only the first symbol has the DMRS. It should be noted that, in a case where the preset rule includes the frequency domain first, then the time domain, the following restriction applies: the configured number of the REs needs to satisfy that the number of the REs in each symbol the same.

As another possible example, the preset rule includes: expanding respectively into the time domain and the frequency domain based on the resource element of the pattern of the first reference signal. The granularity of expansion includes the time-domain interval and the frequency-domain interval.

Exemplarily, as shown in FIG. 15, the time domain and the frequency domain have the same interval, and expansion is performed respectively based on the plurality of resource elements of the pattern of the first reference signal. Referring to FIG. 15, an interval in a high-frequency band is smaller, and an interval in a low-frequency band is larger.

It should be noted that the pattern of the first reference signal includes a processed pattern and a default pattern. The processed pattern may be a pattern processed by artificial intelligence (AI). The processed pattern and the default pattern may be configured by different parameters. For example, the processed pattern may be configured by a seventh parameter, and the default pattern may be configured by an eighth parameter. The processed pattern may be a pilot frequency set obtained by AI, and the default pattern may be a predefined pilot frequency set. The processed pattern may be a sparse pattern, and the default pattern may be a dense pattern, wherein a frequency-domain interval and time-domain interval of the sparse pattern are larger than those of the dense pattern, and the number of REs of the sparse pattern is smaller than that of the dense pattern. The default pattern may also have other names, such as a predefined pattern, a rollback pattern, a conventional pattern, etc., which are not limited in the embodiment of the present disclosure.

In some embodiments, the first node may obtain a plurality of candidate patterns based on AI, and then send the plurality of candidate patterns to a second node. After receiving the plurality of candidate patterns, the second node may determine a target pattern from the plurality of candidate patterns, that is, the above processed pattern, and then send the processed pattern to the first node. The second node may also obtain the processed pattern based on the AI, and then send the processed pattern to the first node.

In some embodiments, after receiving the first reference signal based on the configuration information of the first reference signal, the first node may perform channel estimation based on the first reference signal.

In the embodiments of the present disclosure, the first reference signal is processed based on the configuration information of the first reference signal, that is, the first reference signal is received based on the configuration information of the first reference signal, so that the configuration of the first reference signal is more flexible, which helps to improve the performance of signal processing by the first node, and reduces the overhead of the reference signal.

In some embodiments, the improvement in performance of signal processing mainly depends on the processing of the reference signal. For example, the improvement in measurement performance is based on different reference signals configured in the time domain. For example, the improvement in PUSCH transmission performance is that the first node may select among the configured first reference signal.

In some embodiments, processing the first reference signal by the first node further requires at least one of the following information: a movement speed, a modulation manner, a carrier frequency, a subcarrier interval, a bandwidth, antenna information, scenario information, a near field, a far field, an integrated type, multiple-input multiple-output (MIMO), the number of MIMO layers, a reconfigurable intelligent surface (RIS) parameter, a sequence, subband information, or scheduling information. MIMO includes distributed MIMO, centralized MIMO, 3D MIMO, as well as large-scale MIMO and small-scale MIMO, RIS MIMO and non-RIS MIMO.

In some embodiments, the at least one of the above information is transmitted based on at least one of the following: radio resource control (RRC) signaling, medium access control control element (MAC CE) signaling, downlink control information (DCI), a low power wake-up signal (LP-WUS), a physical downlink shared channel (PDSCH), or system information (SI); or, the at least one of the information is transmitted through the configuration information of the first reference signal, that is, the at least one of the above information is carried in the configuration information of the first reference signal.

In some embodiments, the at least one of the above information may be used for training the first reference signal, and/or for training the pattern of the first reference signal. The at least one of the above information is used for training the first reference signal, and/or for training the pattern of the first reference signal, may include that the first node trains the first reference signal based on the AI, and/or trains the pattern of the first reference signal based on the AI. That is to say, an input parameter of AI is the at least one of the above information.

In some embodiments, the first node may train the first reference signal on a predefined resource, and/or train the pattern of the first reference signal on the predefined resource. The predefined resource includes at least one of the following: an offset, a starting time, a first time-frequency domain resource, a second time-frequency domain resource, a period, etc.

Exemplarily, FIG. 16 is a schematic diagram of a predefined resource provided by embodiments of the present disclosure. Referring to FIG. 16, different time nodes may correspond to different resources. For example, time node 1 corresponds to resource 1, time node 2 corresponds to resource 2, and there is a period between time node 1 and time node 2.

In some embodiments, different predefined resources correspond to different reference signals or patterns of the different reference signals.

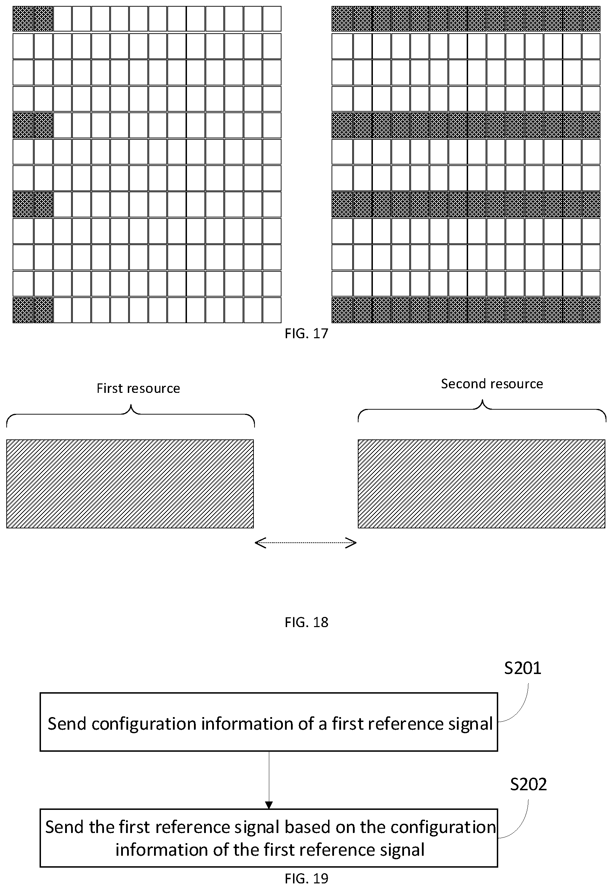

In some embodiments, the different predefined resources have different PDSCH resource occupations. For example, different predefined resources have different bandwidths, different transport block sizes (TBS), different code rates, etc. Exemplarily, FIG. 17 is a schematic diagram of two resource configurations provided by embodiments of the present disclosure. In FIG. 17, colorless blocks are PDSCH resources, and the remaining dark-colored blocks are REs of the reference signals.

In some embodiments, after the first node completes the training of the first reference signal and/or the pattern of the first reference signal based on the at least one of the above information, the first node may feed back a training result on a feedback resource. The feedback resource includes a periodic resource and an aperiodic resource.

In some embodiments, the feedback resource is located after the at least of the above information (that is, the training resource). Exemplarily, FIG. 18 is a schematic diagram of a training resource and a feedback resource provided by embodiments of the present disclosure. A first resource (training resource) in FIG. 18 is a downlink resource used for training, and a second resource (feedback resource) is an uplink resource used for feedback. The uplink resource carries a PUCCH, a PUSCH, a DMRS, etc. The downlink resource carries a DMRS, a PDSCH, a PDCCH, etc.

In some embodiments, a training result fed back by the first node on the feedback resource includes at least one of the following: information of the pattern of the first reference signal or scheduling information. The information of the pattern of the first reference signal may include an identifier of the pattern, and the identifier of the pattern may be an index of the pattern, or a subset of the pattern. The information of the pattern of the first reference signal is used for determining which REs of the first reference signal are expected to be used during scheduling.

The scheduling information includes at least one of the following: a modulation and coding scheme (MCS), a code rate, the number of layers, a port, a TBS, a modulation order, the number of the REs, a bandwidth, or other information.

In some embodiments, the training result may also include how much performance improvement the first node has, or how much margin it has. The margin includes power margin, or offset of the MCS, offset of the TBS, or how many db of margin there is for reference signal received power (RSRP), or related parameters of scheduling information.

In some embodiments, the training result may include at least one of the following:
CSI feedback information, including an actual value and an AI-assisted CSI value;
auxiliary information of the first node, with different gains for different modulation manners such as BPSK and 16QAM; gains under different MCS values and different code rates;
information carried by acknowledgment (ACK) information/NACK information/PUCCH information, to inform the second node how much margin the first node has left, including margins for parameters such as power and MCS, wherein for example, the carried information may be an offset value; or
the number of MIMO layers.

In some embodiments, the configuration information of the first reference signal includes first configuration information and second configuration information. The first configuration information and the second configuration information satisfy at least one of the following: during a validity period of the first configuration information, triggering the second configuration information to become valid in a case where a third specific condition is satisfied; or, during the validity period of the first configuration information, processing the first reference signal according to the second configuration information in the case where the third specific condition is satisfied; or, during the validity period of the first configuration information, deactivating the first configuration information and activating the second configuration information in the case where the third specific condition is satisfied; or, determining, through a signaling indication or activation signaling, to process the first reference signal according to the first configuration information or the second configuration information.

As an example, the third specific condition includes at least one of the following: second signaling is received, wherein the second signaling is used for activating the second configuration information, or for deactivating the first configuration information; wherein the second signaling includes at least one of the following: MAC CE signaling, RRC signaling, DCI, or system information (SI); a timer expires; NACK information is fed back; or a specific indicator or a threshold value is not satisfied. The specific indicator or the threshold value may be preset demodulation performance of a PDSCH.

In some embodiments, the first configuration information includes at least one of the following: a third pattern of the first reference signal; a configuration in a specific mode; or a configuration of a first DMRS.

In some embodiments, the second configuration information includes at least one of the following: a fourth pattern of the first reference signal; a default configuration or a predefined configuration or a higher-layer configuration; or a configuration of a second DMRS.

The third pattern may be understood as a processed pattern, and the fourth pattern may be understood as a default pattern. For the description of the processed pattern and the default pattern, reference may be made to the corresponding descriptions in the above examples, which is omitted here.

In some embodiments, the default pattern includes a 5G pattern. The default pattern is determined based on at least one of the following: an antenna port, a starting symbol, a starting subcarrier, a symbol position, a bandwidth, a frequency-domain interval, a circuit data multiplexing group (CDM group), or an offset.

It should be noted that, in a case where the configuration information of the first reference signal includes the first configuration information and the second configuration information, channel estimation or channel prediction is first performed based on the first configuration information, and in a case where the third condition is satisfied, channel estimation or channel prediction is performed based on the second configuration information.

The following provides an exemplary description of triggering, during the validity period of the first configuration information, the second configuration information to become valid in the case where the third specific condition is satisfied.

Exemplarily, a manner of triggering the second configuration information to become valid includes the following.

For example, the first node feeds back exit information through a PUCCH, wherein the exit information is used for indicating exiting AI-mode DMRS channel prediction (that is, deactivating the first configuration information); and after receiving an exit message, the second node sends second signaling for deactivating an AI mode, and sends a DMRS based on the default pattern in subsequent scheduling. After receiving the second signaling, the first node deactivates the first configuration information and activates the second configuration information.

For another example, the second node actively sends the second signaling to deactivate the first configuration information.

For another example, after the first node feeds back the PUCCH or receives the deactivation signaling, the first node expects to receive the DMRS sent based on the default pattern.

In some embodiments, during a validity period of the second configuration information, the first configuration information is triggered to become valid in a case where a fourth specific condition is satisfied. The fourth specific condition includes at least one of the following: third signaling is received, or a specific indicator or a threshold value is satisfied. The third signaling is used for deactivating the second configuration information, or for activating the first configuration information.

Exemplarily, a manner of triggering the first configuration information to become valid includes the following.

For example, during training, a performance difference between PDSCH demodulation performance of the first node based on an AI-assisted DMRS and PDSCH demodulation performance based on a non-AI-assisted DMRS is within a preset range. Alternatively, performance of the first node based on an RE position predicted by the AI-assisted DMRS and performance of DMRS at all actual RE positions are within a preset performance range.

For another example, based on a training result, the first node reports or feeds back that it may enter the AI-assisted DMRS demodulation mode. After receiving the above feedback, the second node sends the third signaling to the first node.

For another example, based on a feedback result of a PUCCH, the first node reports or feeds back that it may enter the AI-assisted DMRS demodulation mode. After receiving the above feedback, the second node sends the third signaling to the first node.

In some embodiments, the first reference signal includes a fourth reference signal and a fifth reference signal.

As an example, the fourth reference signal and the fifth reference signal are uplink reference signals, and the first node performs uplink transmission or sending based on the fourth reference signal or the fifth reference signal. It should be understood that currently, the first node can only perform uplink transmission based on one reference signal, which has poor flexibility. The embodiment of the present disclosure proposes that the first reference signal includes the fourth reference signal and the fifth reference signal, so that in a case where the first node needs to perform uplink transmission, the first node can select one reference signal from the fourth reference signal and the fifth reference signal for uplink transmission or sending, thereby improving the flexibility of the first node in performing uplink transmission and helping to improve the transmission performance of the first node.

As another example, the fourth reference signal and the fifth reference signal are downlink reference signals or uplink reference signals, and the first node determines, based on fourth indication information or a second specific condition, that the first reference signal is the fourth reference signal or the fifth reference signal. The fourth indication information includes at least one of the following: DCI, MAC CE signaling, or an LP-WUS. The second specific condition is based on at least one of the following: a threshold value, for example, whether the threshold value is satisfied; a parameter value, for example, whether the parameter value is satisfied; mobility, for example, whether mobility occurs; a stationary state, for example, whether it is in the stationary state; feedback of a NACK message; receiving of deactivation signaling; or a timer, for example, whether the timer expires.

In some embodiments, after the first node processes the first reference signal based on the configuration information of the first reference signal, that is, after the above step S102, the first node may obtain information of a third reference signal according to the first reference signal, and then send the information of the third reference signal. Correspondingly, the second node receives the information of the third reference signal from the first node. The information of the third reference signal is used for the second node to send the third reference signal. That is to say, after obtaining the information of the third reference signal based on the first reference signal, the first node may send the information of the third reference signal to the second node, to inform the second node to stop sending the first reference signal and to send the third reference signal instead. After receiving the information of the third reference signal, the second node may send the third reference signal based on the information of the third reference signal. After sending the information of the third reference signal, the first node may receive the third reference signal based on the information of the third reference signal. In this way, the first node and the second node have a consistent understanding of the configuration of the third reference signal, which helps to reduce the power consumption of the first node.

In some embodiments, a pattern of the third reference signal, a time-frequency domain resource position, a frequency point, a frequency band, a port, a beam, the number of resource elements of the third reference signal, or positions of the resource elements of the third reference signal are included.

As a possible example, taking an example where the third reference signal is a downlink reference signal, after the first node processes the first reference signal based on the configuration information of the first reference signal, that is, after the above step S102, the first node may obtain information of the downlink reference signal according to the processing of the first reference signal, and then send the information of the downlink reference signal. Correspondingly, the second node receives the information of the downlink reference signal, and sends the downlink reference signal based on the information of the downlink reference signal. After sending the information of the downlink reference signal, the first node receives the downlink reference signal based on the information of the downlink reference signal.

The information of the downlink reference signal includes at least one of the following: selection information of the downlink reference signal, pattern information of the downlink reference signal, auxiliary information of the downlink reference signal, position information of a resource element of the downlink reference signal, type information of the downlink reference signal, or a rollback indication of the downlink reference signal.

As an example, sending the information of the downlink reference signal includes: sending the information of the downlink reference signal based on a first transmission manner, wherein the first transmission manner includes at least one of the following: MAC signaling, RRC signaling, a physical uplink control channel (PUCCH), uplink control information (UCI), or a physical random access channel (PRACH). That is to say, the information of the downlink reference signal is carried in at least one of the medium access control (MAC) signaling, the RRC signaling, the physical uplink control channel (PUCCH), the uplink control information (UCI), or the physical random access channel (PRACH).

In some embodiments, as shown in FIG. 19, embodiments of the present disclosure further provide a communication method. The method may be performed by a second node, and the second node may be the second node 120 shown in FIG. 6 above. The method may include the following steps.

At step S201, configuration information of a first reference signal is sent.

In some embodiments, to improve performance of channel estimation performed by a first node, the second node may send the configuration information of the first reference signal to the first node.

As an example, the second node configuring the configuration information of the first reference signal may mean that the second node predicts communication services in the coming period of time based on AI, and then configures the configuration information of the first reference signal according to a prediction result of the communication services.

In some embodiments, the configuration information of the first reference signal includes a position of a resource element of the first reference signal, and the resource element includes a first resource element and a second resource element.

In some embodiments, the first reference signal is a demodulation reference signal (DMRS).

In some embodiments, the first resource element is used for carrying a non-zero-power first reference signal, and the second resource element is used for carrying a zero-power first reference signal; or, the first resource element and the second resource element are used for carrying the non-zero-power first reference signal; or, the first resource element is used for transmitting a data channel and the first reference signal, and the second resource element is used for transmitting the first reference signal; or, a port corresponding to the first resource element is the same as a port corresponding to a data channel, and a port corresponding to the second resource element is different from the port corresponding to the data channel; or, a position of the second resource element is a subset of a position of the first resource element; or, the position of the second resource element does not overlap with the position of the first resource element; or, the position of the first resource element and the position of the second resource element are consecutive in a time domain or consecutive in a frequency domain; or, the number of the second resource elements is determined according to the number of the first resource elements; or, a sum of the number of the second resource elements and the number of the first resource elements is a specific value; or, the number of the second resource elements is proportional to the number of the first resource elements.

In some embodiments, the configuration information of the first reference signal includes a first parameter and a second parameter, the first parameter is used for determining the position of the first resource element, and the second parameter is used for determining the position of the second resource element.

In some embodiments, the position of the second resource element is determined according to the second parameter and the first parameter; or, the second parameter is associated with the first parameter.

In some embodiments, the configuration information of the first reference signal includes a third parameter and a fourth parameter, the third parameter is used for indicating the position of the resource element of the first reference signal, and the fourth parameter is used for indicating the position of the first resource element or the position of the second resource element.

In some embodiments, the configuration information of the first reference signal includes a fifth parameter and a sixth parameter, the fifth parameter is used for indicating the position of the resource element of the first reference signal, and the sixth parameter is used for indicating at least one of the following of the first reference signal: a function, a usage, or a type.

In some embodiments, an offset exists between power of the first resource element and power of the second resource element; or, the power of the second resource element is obtained according to the power of the first resource element; or, the power of the first resource element is associated with the power of the second resource element.

In some embodiments, the configuration information of the first reference signal includes a pattern of the first reference signal, and the pattern of the first reference signal is used for indicating a position of a resource element of the first reference signal.

In some embodiments, the pattern of the first reference signal includes a first pattern and/or a second pattern; a position of a resource element of the first pattern is used for transmitting a data channel and the first reference signal, and a position of a resource element of the second pattern is used for transmitting the first reference signal; or, the first pattern and the second pattern are used for carrying a non-zero-power first reference signal; or, the first pattern is used for transmitting the data channel and the first reference signal, and the second pattern is used for transmitting the first reference signal; or, a position of a second resource element determined by the second pattern is a subset of a first resource element determined by the first pattern; or, the position of the second resource element determined by the second pattern does not overlap with a position of the first resource element determined by the first pattern; or, the position of the first resource element determined by the first pattern and the position of the second resource element determined by the second pattern are consecutive in a time domain or consecutive in a frequency domain.

In some embodiments, the second node may also send first indication information to the first node. The first indication information is used for activating or deactivating the pattern of the first reference signal; or, the first indication information is used for activating, deactivating, or determining a resource element subset of the pattern of the first reference signal; or, the first indication information is used for activating, deactivating, or determining signal transmission or channel transmission based on the pattern of the first reference signal; or, the pattern of the first reference signal includes multiple patterns, and the first indication information is used for activating, deactivating, or determining at least one pattern among the patterns of the first reference signal.

In some embodiments, the second node may further send second indication information to the first node, wherein the second indication information is used for determining a pattern of a second reference signal.

In some embodiments, the configuration information of the first reference signal includes second indication information.

In some embodiments, the pattern of the second reference signal is a subset of the pattern of the first reference signal; or, the pattern of the first reference signal is a subset of the pattern of the second reference signal; or, the pattern of the first reference signal and the pattern of the second reference signal partially overlap, or are consecutive in a time domain, or are consecutive in a frequency domain; or, the pattern of the first reference signal is associated with the pattern of the second reference signal.

In some embodiments, the first reference signal or the second reference signal is used for at least one of the following: training, monitoring, inference, data transmission or reception, control channel transmission, reception or detection, or measurement.

In some embodiments, the configuration information of the reference signal includes third indication information, and the third indication information is used for indicating at least one of the following: a starting position of the first reference signal, a frequency-domain interval, a time-domain interval, a sequence length of the first reference signal, a sequence type of the first reference signal, the number of time-domain resources of the first reference signal, or the number of frequency-domain resources of the first reference signal; wherein the starting position of the first reference signal includes a frequency-domain starting position and a time-domain starting position.

In some embodiments, the third indication information includes at least one of the following: first bitmap information, wherein the first bitmap information is used for indicating the frequency-domain starting position, the frequency-domain interval, and the number of the frequency-domain resources; second bitmap information, wherein the second bitmap information is used for indicating the time-domain starting position, the time-domain interval, and the number of the time-domain resources; or pattern index indication information.

In some embodiments, the position of the resource element of the first reference signal or the pattern of the first reference signal is determined based on at least one of the following: a time-domain resource; a frequency-domain resource; a subcarrier interval; a frequency point position; carrier information; cell information; a time-domain position; antenna port information; a transmission manner of a data channel; whether data is transmitted on the position of the resource element of the first reference signal; a usage of the first reference signal, wherein the usage includes training, monitoring or inference; or a first specific condition.

In some embodiments, the first specific condition is based on at least one of the following: a threshold value; a parameter value; mobility; stationary; a non-acknowledgement (NACK) message; activation signaling or deactivation signaling; or a timer.

In some embodiments, processing the first reference signal further requires at least one of the following information: a movement speed, a modulation manner, a carrier frequency, a subcarrier interval, a bandwidth, antenna information, scenario information, a near field, a far field, an integrated type, multiple-input multiple-output (MIMO), the number of MIMO layers, a reconfigurable intelligent surface (RIS) parameter, a sequence, subband information, or scheduling information.

In some embodiments, the at least one of the information is transmitted based on at least one of the following: radio resource control (RRC) signaling, medium access control control element (MAC CE) signaling, downlink control information (DCI), a low power wake-up signal (LP-WUS), a physical downlink shared channel (PDSCH), or system information (SI); or, the at least one of the information is transmitted through the configuration information of the first reference signal.

In some embodiments, the first reference signal includes a fourth reference signal and a fifth reference signal.

In some embodiments, the fourth reference signal and the fifth reference signal are uplink reference signals, and the first node performs uplink transmission or sending based on the fourth reference signal or the fifth reference signal.

In some embodiments, the fourth reference signal and the fifth reference signal are downlink reference signals or uplink reference signals, and the first node determines, based on fourth indication information or a second specific condition, that the first reference signal is the fourth reference signal or the fifth reference signal.

In some embodiments, the fourth indication information includes at least one of the following: DCI, MAC CE signaling, or an LP-WUS. The second specific condition is based on at least one of the following: a threshold value; a parameter value; mobility; a stationary state; feedback of a NACK message; receiving of deactivation signaling; or a timer.

In some embodiments, the configuration information of the first reference signal includes first configuration information and second configuration information.

In some embodiments, the first configuration information and the second configuration information satisfy at least one of the following: during a validity period of the first configuration information, triggering the second configuration information to become valid in a case where a third specific condition is satisfied; or, during the validity period of the first configuration information, processing the first reference signal according to the second configuration information in the case where the third specific condition is satisfied; or, during the validity period of the first configuration information, deactivating the first configuration information and activating the second configuration information in the case where the third specific condition is satisfied; or, determining, through a signaling indication or activation signaling, to process the first reference signal according to the first configuration information or the second configuration information.

In some embodiments, the third specific condition includes at least one of the following: second signaling is received, wherein the second signaling includes at least one of the following: MAC CE signaling, RRC signaling, DCI, or system information (SI); a timer expires; NACK information is fed back; or a specific indicator or a threshold value is not satisfied.

In some embodiments, the first configuration information includes at least one of the following: a third pattern of the first reference signal; a configuration in a specific mode; or a configuration of a first DMRS; and the second configuration information includes at least one of the following: a fourth pattern of the first reference signal; a default configuration or a predefined configuration or a higher-layer configuration; or a configuration of a second DMRS.

It should be noted that for the specific description of the configuration information of the first reference signal, reference may be made to the corresponding descriptions in the embodiment shown in FIG. 7 above, which is not repeated here.

Step S202, the first reference signal is sent based on the configuration information of the first reference signal.

In some embodiments, after sending the configuration information of the first reference signal to the first node, the second node may send the first reference signal based on the configuration information of the first reference signal. It should be understood that after receiving the configuration information of the first reference signal, the first node should receive the first reference signal based on the configuration information of the first reference signal. Therefore, the second node sends the first reference signal based on the configuration information of the first reference signal, so that the first node can correctly receive the first reference signal, reducing the complexity of signal transmission and helping to reduce the power consumption of the first node.

In some embodiments, the second node may further receive information of a third reference signal from the first node, wherein the information of the third reference signal is obtained based on the first reference signal. After receiving the information of the third reference signal, the second node sends the third reference signal to the first node based on the information of the third reference signal, and correspondingly, the first node receives the third reference signal sent by the second node.

In some embodiments, the information of the third reference signal includes at least one of the following: a pattern of the third reference signal, a time-frequency domain resource position, a frequency point, a frequency band, a port, a beam, the number of resource elements of the third reference signal, or positions of the resource elements of the third reference signal.

In some embodiments, the second node may further receive information of a downlink reference signal from the first node, wherein the information of the downlink reference signal is obtained according to processing of the first reference signal. The information of the downlink reference signal includes at least one of the following: selection information of the downlink reference signal, pattern information of the downlink reference signal, auxiliary information of the downlink reference signal, position information of a resource element of the downlink reference signal, type information of the downlink reference signal, or a rollback indication of the downlink reference signal.

Based on the embodiment shown in FIG. 19, the second node sends the configuration information of the first reference signal to the first node, so that the first node processes the first reference signal based on the configuration information of the first reference signal, and thus the first node can use the reference signal flexibly, helping to reduce the overhead of the second node and improve the processing performance of the first node based on the reference signal, such as PUSCH transmission and measurement.

The communication method provided by the embodiment of the present disclosure is illustrated below with reference to some specific examples. Exemplarily, embodiments of the present disclosure provide a communication method. The method is performed by a first node, and the first node may be the first node 110 shown in FIG. 6. The method includes but is not limited to the following embodiments.

The first node receives configuration information of a first reference signal, and processes the first reference signal based on the configuration information of the first reference signal.

In some embodiments, the first reference signal includes a DMRS, a positioning reference signal, a synchronization signal, a sounding reference signal, a phase tracking reference signal, a channel state measurement (CSI) reference signal, an interfering measurement reference signal, and a remote interference management (RIM) reference signal. The synchronization signal includes a PSS, an SSS, an LP-SS, etc.

In some embodiments, processing of the first reference signal includes receiving, detecting, transmitting, sending, training, monitoring, and inferring. Exemplarily, for processing the first reference signal, the first node may receive or detect the first reference signal, or may train, monitor, or infer the first reference signal to obtain other reference signals, such as a second reference signal, a third reference signal, a fourth reference signal, and a fifth reference signal.

In some embodiments, processing the first reference signal includes processing the first reference signal and a signal, or processing the first reference signal and a channel.

In some embodiments, the configuration information of the first reference signal includes a position of a resource element of the first reference signal, and the resource element includes a first resource element and a second resource element. The position of the resource element of the first reference signal is determined via a pattern, or is determined via the configuration information of the first reference signal.

In some embodiments, the first resource element is used for carrying a non-zero-power first reference signal, and the second resource element is used for carrying a zero-power first reference signal; or, the first resource element and the second resource element are used for carrying the non-zero-power first reference signal; or, the first resource element is used for transmitting a data channel and the first reference signal, and the second resource element is used for transmitting the first reference signal; or, a port corresponding to the first resource element is the same as a port corresponding to the data channel, and a port corresponding to the second resource element is different from the port corresponding to the data channel; a position of the second resource element is determined according to a position of the first resource element; or, a position of the second resource element is a subset of a position of the first resource element; or, the position of the second resource element does not overlap with the position of the first resource element; or, the position of the first resource element and the position of the second resource element are consecutive in a time domain or consecutive in a frequency domain; or, the number of the second resource elements is determined according to the number of the first resource elements; or, a sum of the number of the second resource elements and the number of the first resource elements is a specific value; or, the number of the second resource elements is proportional to the number of the first resource elements.

Exemplarily, the first resource element and the second resource element are used for carrying a non-zero-power first reference signal, and there is an offset between power of the first resource element and power of the second resource element.

Exemplarily, the port corresponding to the first resource element is the same as the port corresponding to the data channel, and the port corresponding to the second resource element is different from the port corresponding to the data channel; or, the port corresponding to the second resource element is the same as a port corresponding to a control channel.

Exemplarily, the position of the first resource element includes the position of the second resource element, or a position range of the first resource element includes the position of the second resource element. For example, a time-domain span of the first resource element is symbols 1 to 14, and the time-domain position of the second resource element is within 1 to 14. For example, the position of the first resource element is a set with more elements, and the position of the second resource element is one of subsets thereof.

In some embodiments, the configuration information of the first reference signal includes a first parameter and a second parameter, the first parameter is used for determining the position of the first resource element, and the second parameter is used for determining the position of the second resource element.

As a possible example, the first parameter is a parameter configured by RRC, and the second parameter is a parameter determined by DCI or MAC CE. As another possible example, the first parameter is a parameter configured by RRC, and the second parameter is a parameter configured by RRC.

In some embodiments, the position of the second resource element is determined according to the second parameter and the first parameter; or, the second parameter is associated with the first parameter.

Exemplarily, the position of the first resource element is at least one or one set, and the second parameter points to one of the subsets of the first resource element through an indication index, so as to determine the position of the second resource element.

Exemplarily, the second parameter is associated with the first parameter, the position of the first resource element is determined via the first parameter, and the position of the second resource element is determined via the second parameter.

In some embodiments, the configuration information of the first reference signal includes a third parameter and a fourth parameter, the third parameter is used for indicating the position of the resource element of the first reference signal, and the fourth parameter is used for indicating the position of the first resource element or the position of the second resource element.

In some embodiments, the configuration information of the first reference signal includes a fifth parameter and a sixth parameter, the fifth parameter is used for indicating the position of the resource element of the first reference signal, and the sixth parameter is used for indicating at least one of the following of the first reference signal: a function, a usage, or a type.

As an example, the function or the usage includes being used for demodulation, positioning, synchronization, channel sounding, phase tracking, channel measurement, interference measurement, remote interference management, training, monitoring, and inference. The type includes a reference signal type based on different functions or usages, or a type of different patterns.

In some embodiments, a first type of the first reference signal and a second type of the first reference signal are different in at least one of the following: a port number, a beam, a carrier, a cell, a frequency band, a subcarrier interval, a time-domain position, a time node, a path, or a transmission point.

In some embodiments, an offset exists between power of the first resource element and power of the second resource element; or, the power of the second resource element is obtained according to the power of the first resource element; or, the power of the first resource element is associated with the power of the second resource element.

In some embodiments, the configuration information of the first reference signal includes a pattern of the first reference signal, and the pattern of the first reference signal is used for indicating a position of a resource element of the first reference signal.

As an example, the position of the resource element includes a time-domain position, a frequency-domain position, and a spatial-domain position. The time-domain position includes at least one of a starting symbol position in a time domain, the number of symbols, a position of a symbol, an interval, or a duration. The frequency-domain position includes at least one of a starting position of an RB/RE in the frequency domain, the number of RBs/REs, or an interval. The spatial-domain position includes a beam direction, a beam index, the number of beams, a position of each beam in the time domain, a port number, or the like.

In some embodiments, the pattern of the first reference signal includes a first pattern and/or a second pattern.

A position of a resource element of the first pattern is used for transmitting a data channel and the first reference signal, and a position of a resource element of the second pattern is used for transmitting the first reference signal; or, the first pattern and the second pattern are used for carrying a non-zero-power first reference signal; or, the first pattern is used for transmitting the data channel and the first reference signal, and the second pattern is used for transmitting the first reference signal; or, a position of a second resource element determined by the second pattern is a subset of a first resource element determined by the first pattern; or, the position of the second resource element determined by the second pattern does not overlap with a position of the first resource element determined by the first pattern; or, the position of the first resource element determined by the first pattern and the position of the second resource element determined by the second pattern are consecutive in a time domain or consecutive in a frequency domain.

In some embodiments, the first node receives first indication information. The first indication information is used for activating or deactivating the pattern of the first reference signal; or, the first indication information is used for activating, deactivating, or determining a resource element subset of the pattern of the first reference signal; or, the first indication information is used for activating, deactivating, or determining signal transmission or channel transmission based on the pattern of the first reference signal; or, the pattern of the first reference signal includes multiple patterns, and the first indication information is used for activating, deactivating, or determining at least one pattern among the patterns of the first reference signal.

In some embodiments, the first node receives first indication information. The first indication information is used for activating or deactivating the configuration information of the first reference signal; or, the first indication information is used for activating or deactivating or determining a sub-position or a subset of the resource element of the first reference signal; or, the first indication information is used for activating or deactivating or determining signal transmission or channel transmission based on the configuration information of the first reference signal; or, the position of the resource element of the first reference signal includes one set of positions or multiple sets of positions, and the first indication information is used for activating or deactivating or determining at least one set of positions of the resource element of the first reference signal. One set of positions represents all positions of at least one resource element of the first reference signal.

In some embodiments, the resource element may be a zero-power resource element or a non-zero-power resource element.

As an example, the first indication information is borne or carried or determined via DCI, an MAC CE, an LP-WUS, RRC, or a sequence.

In some embodiments, the method may further include the following steps: the first node determines a pattern of a second reference signal according to the pattern of the first reference signal; or, receives second indication information, wherein the second indication information is used for determining the pattern of the second reference signal.

Exemplarily, the pattern of the first reference signal includes at least one pattern, and the pattern of the second reference signal is one of the at least one pattern.

Exemplarily, the position of the resource element of the first reference signal is one set, and the second reference signal is determined based on the set, for example, as a subset.

In some embodiments, the pattern of the first reference signal is used for indicating the position of the resource element of the first reference signal, and the pattern of the second reference signal is determined according to the pattern of the first reference signal.

In some embodiments, the pattern of the first reference signal is used for indicating the position of the resource element of the first reference signal, and the pattern of the second reference signal is determined according to second indication information.

In some embodiments, the configuration information of the first reference signal includes the second indication information. That is, the second indication information may be sent separately by the second node, or may be carried in the configuration information of the first reference signal.

In some embodiments, the first node may determine the position of the resource element of the second reference signal according to the position of the resource element of the first reference signal.

In some embodiments, the first node may determine the position of the resource element of the second reference signal according to the position of the resource element of the first reference signal and the second indication information.

In some embodiments, the first node may determine the position of the resource element of the second reference signal according to the second indication information. The position of the resource element of the first reference signal may be determined according to the configuration information of the first reference signal.

In some embodiments, the second indication information is borne or carried or determined via DCI, MAC CE signaling, an LP-WUS, RRC signaling, or a sequence.

In some embodiments, the pattern of the second reference signal is a subset of the pattern of the first reference signal; or, the pattern of the first reference signal is a subset of the pattern of the second reference signal; or, the pattern of the first reference signal and the pattern of the second reference signal partially overlap, or are consecutive in a time domain, or are consecutive in a frequency domain; or, the pattern of the first reference signal is associated with the pattern of the second reference signal.

For example, the pattern of the first reference signal is associated with at least one pattern of the second reference signal. For another example, the pattern of the second reference signal is associated with at least one pattern of the first reference signal.

In some embodiments, the first reference signal or the second reference signal is used for at least one of the following: training, monitoring, inference, data transmission or reception, control channel transmission, reception or detection, or measurement.

In some embodiments, the configuration information of the first reference signal includes third indication information, and the third indication information is used for indicating at least one of the following: a starting position of the first reference signal, a frequency-domain interval, a time-domain interval, a sequence length of the first reference signal, a sequence type of the first reference signal, the number of time-domain resources of the first reference signal, or the number of frequency-domain resources of the first reference signal; wherein the starting position of the first reference signal includes a frequency-domain starting position and a time-domain starting position.

In some embodiments, the third indication information includes at least one of the following: first bitmap information, wherein the first bitmap information is used for indicating the frequency-domain starting position, the frequency-domain interval, and the number of the frequency-domain resources; second bitmap information, wherein the second bitmap information is used for indicating the time-domain starting position, the time-domain interval, and the number of the time-domain resources; or pattern index indication information.

Exemplarily, the first bitmap information indicates the frequency-domain resources, including the frequency-domain starting position and the number of resources in a frequency domain, such as the number of RBs and the number of RBGs. The second bitmap information indicates the time-domain resources, including the time-domain starting position and the number of resources in a time domain, such as the number of the symbols, the number of slots, and the number of repetitions. The pattern index information is used for determining one index, and this index points to or is associated with one pattern, which is used for determining the position of the resource element of the first reference signal.

In some embodiments, the position of the resource element of the first reference signal or the pattern of the first reference signal is determined based on at least one of the following: a time-domain resource; a frequency-domain resource; a subcarrier interval; a frequency point position; carrier information; cell information; a time-domain position; antenna port information; a transmission manner of a data channel; whether data is transmitted on the position of the resource element of the first reference signal; a usage of the first reference signal, wherein the usage includes training, monitoring or inference; or a first specific condition.

In some embodiments, the antenna port information includes: the number of antenna ports; an antenna port number or index; or an antenna port type.

In some embodiments, a time node and the above time-domain position are the same, both being used for determining at least one time-domain position. The time node or the time-domain position includes at least one of the following information: a starting time point, a reference time point, a time period, an ending time point, a period, or an offset. The time node or the time-domain position is defined based on a time unit, such as a millisecond, a microsecond, a second, a symbol, a slot, a subframe, a radio frame, a superframe, or a basic time unit T.

In some embodiments, the data channel includes a physical shared channel, a downlink physical shared channel, an uplink physical shared channel, a downlink data channel, and an uplink data channel.

In some embodiments, the cell information includes at least one of the following information: serving cell information, SCell information, a cell identity, a neighboring cell, an intra-frequency cell, an inter-frequency cell, a virtual cell, a physical cell identity (PCI), or a list based on the above information.

In some embodiments, data is transmitted on the position of the resource element of the first reference signal or not corresponds to different patterns or different positions position of the resource element of the first reference signal.

In some embodiments, different patterns or positions of the resource element of the first reference signal are determined or corresponded according to the usage of the first reference signal.

In some embodiments, the first specific condition is based on at least one of the following: a threshold value; a parameter value; mobility; stationary; a non-acknowledgement (NACK) message; activation signaling or deactivation signaling; or a timer.

As an example, the first node may determine a corresponding resource position of the first reference signal, or determine the configuration information of the first reference signal, or determine the pattern of the first reference signal, according to whether the threshold value, the parameter value, the mobility, or a stationary condition is satisfied. Thereafter, the first reference signal is processed according to the pattern of the first reference signal, the resource position of the first reference signal, or the configuration information of the first reference signal.

As an example, the position of the resource element, the pattern, or the configuration information of the first reference signal is determined according to the NACK message. For example, when no NACK is fed back, the first reference signal is based on a position, a pattern, or configuration information of a first resource element; when a NACK is fed back, the first reference signal is based on a position, a pattern, or configuration information of a second resource element.

As an example, according to the first specific condition, the position of the resource element or the pattern of the first reference signal is different at different time-domain positions.

As an example, the position of the resource element, the pattern, or the configuration information of the first reference signal is determined according to activation signaling or deactivation signaling. For example, when there is no activation signaling or deactivation signaling, the first reference signal is determined based on the position, the pattern, or the configuration information of the first resource element; when there is the activation signaling or the deactivation signaling, the first reference signal is determined based on the position, the pattern, or the configuration information of the second resource element.

As an example, the position of the resource element, the pattern, or the configuration information of the first reference signal is determined according to whether a timer expires.

In some embodiments, processing the first reference signal further requires at least one of the following information: a movement speed, a modulation manner, a carrier frequency, a subcarrier interval, a bandwidth, antenna information, scenario information, a near field, a far field, an integrated type, MIMO, the number of MIMO layers, a RIS parameter, a sequence, subband information, or scheduling information.

As an example, the first configuration information includes: a movement speed, a modulation manner, a carrier frequency, a subcarrier interval, a bandwidth, an antenna, a scenario, a near field, a far field, an integrated type, multiple-input multiple-output (MIMO), the number of MIMO layers, a reconfigurable intelligent surface (RIS) parameter, a sequence, a subband frequency, and scheduling information. In some embodiments, the above information is transmitted through RRC, DCI, or MAC CE.

Exemplarily, the antenna includes port information and antenna number information. The scenario information includes an outdoor scenario, an indoor scenario, a rural scenario, an urban scenario, or the like. The near field and the far field are determined based on a distance centered on a field source. The integrated type represents whether a distribution manner of base stations or communication nodes is centralized or decentralized. The subband information includes an index of a frequency subband or a frequency-domain resource position. The sequence is used for determining an m sequence, a pseudorandom noise (PN) sequence, a ZC sequence, a 0-1 sequence, or other sequences.

In some embodiments, the at least one of the information is transmitted based on at least one of the following: RRC signaling, MAC CE signaling, DCI, an LP-WUS, a PDSCH, or SI; or, the at least one of the information is transmitted through the configuration information of the first reference signal.

In some embodiments, after the first node receives the configuration information of the first reference signal and processes the first reference signal based on the configuration information of the first reference signal, the method may further include the following steps: information of a third reference signal is obtained according to the first reference signal; and the information of the third reference signal is sent.

In some embodiments, the information of the third reference signal includes at least one of the following: a pattern of the third reference signal, a time-frequency domain resource position, a frequency point, a frequency band, a port, a beam, the number of resource elements of the third reference signal, or positions of the resource elements of the third reference signal.

As an example, the frequency point, the frequency band, the port, and the beam are the same as frequency point information, frequency band information, port information, and beam information.

As an example, the time-frequency domain resource position includes a time-domain resource position and/or a frequency-domain resource position. The time-domain resource position includes a time-domain position of a resource, for example, a starting symbol and a symbol number where the resource is located. The frequency-domain resource position includes a frequency-domain position of a resource, for example, a starting RB and an RB index where the resource is located.

In some embodiments, the resource element is a resource element or a resource unit, and the resource element is a resource element defined based on a time domain and a frequency domain.

In some embodiments, after the first node processes the first reference signal based on the configuration information of the first reference signal, the method may further include the following step: information of a downlink reference signal is sent according to the processing of the first reference signal.

As an example, according to the processing of the first reference signal, the information of the downlink reference signal is sent through an uplink channel or signal.

In some embodiments, the information of the downlink reference signal includes at least one of the following: selection information of the downlink reference signal, pattern information of the downlink reference signal, auxiliary information of the downlink reference signal, position information of a resource element of the downlink reference signal, type information of the downlink reference signal, or a rollback indication of the downlink reference signal.

As a possible example, after the first reference signal is received, measured, trained, monitored, or inferred, the first node sends the information of the downlink reference signal through the uplink channel or signal according to the processing result. After receiving the information of the downlink reference signal, the second node further considers or adjusts the configuration information of the first reference signal.

In some embodiments, sending the information of the downlink reference signal includes: sending the information of the downlink reference signal based on a first transmission manner, wherein the first transmission manner includes at least one of the following: MAC signaling, RRC signaling, a PUCCH, UCI, or a PRACH.

In some embodiments, the first reference signal includes a fourth reference signal and a fifth reference signal.

In some embodiments, the fourth reference signal and the fifth reference signal are uplink reference signals, and the first node performs uplink transmission or sending based on the fourth reference signal or the fifth reference signal.

In some embodiments, the configuration information of the first reference signal includes configuration information of a fourth reference signal and configuration information of a fifth reference signal, and when performing transmission or sending of the uplink signal or channel, the first node selects the fourth reference signal or the fifth reference signal as a reference signal for the transmission or sending of the uplink signal or channel.

In some embodiments, the fourth reference signal and the fifth reference signal are downlink reference signals or uplink reference signals, and the first node determines, based on fourth indication information or a second specific condition, that the first reference signal is the fourth reference signal or the fifth reference signal.

In some embodiments, the configuration information of the first reference signal includes the configuration information of the fourth reference signal and the configuration information of the fifth reference signal, and the first node determines, based on fourth indication information or a second specific condition, the fourth reference signal or the fifth reference signal as a reference signal for transmission or reception of a downlink signal or channel.

In some embodiments, the fourth indication information includes at least one of the following: DCI, MAC CE signaling, or an LP-WUS. Alternatively, the second specific condition is based on at least one of the following: a threshold value; a parameter value; mobility; a stationary state; feedback of a NACK message; activation or deactivation signaling; or a timer.

The DCI and the LP-WUS belong to one of physical layer signaling, and the MAC CE is one of MAC layer signaling. In some embodiments, the fourth reference signal or the fifth reference signal is determined based on the physical layer signaling or the MAC layer signaling.

In some embodiments, when a condition is satisfied, the fourth reference signal is determined as a reference signal of a signal or channel; when the condition is not satisfied, the fifth reference signal is determined as the reference signal of the signal or channel.

Exemplarily, when no NACK information is fed back, the reference signal of the signal or channel is the fourth reference signal. When the NACK information is fed back, the first node expects the reference signal of the signal or channel to be the fifth reference signal.

Exemplarily, taking an example where the second specific condition is any one of a threshold value, a parameter value, mobility, or a stationary state, in a case where the second specific condition is satisfied, the fourth reference signal is a reference signal used for measurement relaxation or AI measurement. In a case where the second specific condition is not satisfied, the fourth reference signal is a reference signal used for normal measurement. The normal measurement is based on a measurement period T1, and the measurement relaxation is based on a measurement period T2, where T2 > T1. The AI measurement is characterized by being measurement based on port information, a beam, a carrier, a cell, a frequency band, a subcarrier interval, a time-domain position, a time node, a path, and a transmission point.

Exemplarily, when activation signaling or deactivation signaling is received, according to an indication of the activation signaling or the deactivation signaling, whether the fourth reference signal or the fifth reference signal is used for measurement relaxation, for AI measurement, or for signal or channel transmission is determined. When it is indicated to be used for measurement or signal or channel transmission, processing the first reference signal includes receiving a corresponding reference signal, such as an SSB, a PSS, an SSS, an LP-SS, a DMRS, and a CSI-RS.

In some embodiments, the configuration information of the first reference signal includes first configuration information and second configuration information.

In some embodiments, the first configuration information and the second configuration information satisfy at least one of the following: during a validity period of the first configuration information, triggering the second configuration information to become valid in a case where a third specific condition is satisfied; or, during the validity period of the first configuration information, processing the first reference signal according to the second configuration information in the case where the third specific condition is satisfied; or, during the validity period of the first configuration information, deactivating the first configuration information and activating the second configuration information in the case where the third specific condition is satisfied; or, determining, through a signaling indication or activation signaling, to process the first reference signal according to the first configuration information or the second configuration information.

In some embodiments, the third specific condition includes at least one of the following: second signaling is received, wherein the second signaling includes at least one of the following: MAC CE signaling, RRC signaling, DCI, or system information (SI); a timer expires; NACK information is fed back; or a specific indicator or a threshold value is not satisfied.

It should be noted that satisfying the specific condition and not satisfying the specific condition are equivalent. For example, if "satisfying" means "greater than", then "not satisfying" means "less than or equal to".

Exemplarily, during a validity period of first configuration information, the second configuration information is triggered to become valid under at least one of the following conditions: second signaling is received, wherein the second signaling includes at least one of the following: MAC CE signaling, RRC signaling, DCI, or system information (SI); a timer expires; NACK information is fed back; or a specific indicator or a threshold value is not satisfied.

In some embodiments, triggering the second configuration to become valid, processing the first reference signal according to the second configuration information, activating the second configuration information, or processing the first reference signal according to the first configuration information or the second configuration information has a time delay, a gap, or an offset. Exemplarily, from a case where the third specific condition is satisfied or a signaling indication or activation signaling is received, to a case where the second configuration information becomes valid, or the second configuration information is activated, or the first reference signal is processed according to the first configuration information or the second configuration information, there is a time delay, a gap, or an offset.

In some embodiments, the first configuration information includes at least one of the following: a third pattern of the first reference signal; a configuration in a specific mode; or a configuration of a first DMRS; and the second configuration information includes at least one of the following: a fourth pattern of the first reference signal; a default configuration or a predefined configuration or a higher-layer configuration; or a configuration of a second DMRS.

As a possible example, during a validity period of the first configuration information, in a case where the third specific condition is satisfied, the second configuration information is triggered to become valid, wherein the first configuration information includes at least one of the following: a third pattern of the first reference signal; a configuration in a specific mode; or a configuration of a first DMRS. The second configuration information includes at least one of the following: a fourth pattern of the first reference signal; a default configuration or a predefined configuration or a higher-layer configuration; or a configuration of a second DMRS.

As another possible example, during the validity period of the first configuration information, the first reference signal is processed according to the second configuration information in the case where the third specific condition is satisfied. The first configuration information includes at least one of the following: a third pattern of the first reference signal; a configuration in a specific mode; or a configuration of a first DMRS. The second configuration information includes at least one of the following: a fourth pattern of the first reference signal; a default configuration or a predefined configuration or a higher-layer configuration; or a configuration of a second DMRS.

As another possible example, during the validity period of the first configuration information, the first configuration information is deactivated and the second configuration information is activated in the case where the third specific condition is satisfied; or, through a signaling indication or activation signaling, it is determined to process the first reference signal according to the first configuration information or the second configuration information. The first configuration information includes at least one of the following: a third pattern of the first reference signal; a configuration in a specific mode; or a configuration of a first DMRS. The second configuration information includes at least one of the following: a fourth pattern of the first reference signal; a default configuration or a predefined configuration or a higher-layer configuration; or a configuration of a second DMRS.

It should be noted that the above embodiments and the embodiments in each step may be combined at will.

The above mainly introduces the solutions provided by the present disclosure from the perspective of interaction between various nodes. It should be understood that each node, for example, the first node or the second node, includes hardware structures and/or software modules corresponding to execution of each function so as to implement the above functions. Those skilled in the art should readily appreciate that, in combination with the algorithm steps of the examples described in the embodiments disclosed herein, the present disclosure can be implemented in the form of hardware, or a combination of hardware and computer software. Whether a certain function is executed in a mode of hardware or a mode of driving the hardware by the computer software depends on a specific application and design constraint conditions of the technical solutions. Professional technicians may use different methods to implement the described functions for each particular application, but such implementation is not to be regarded beyond the scope of the present disclosure.

According to the above method embodiments, the embodiments of the present disclosure may divide functional modules for the first node or the second node. For example, each functional module may be divided for the corresponding function, or two or more functions may be integrated into one functional module. The above integrated module may be implemented in the form of hardware or in the form of software. It should be noted that division of modules in the embodiments of the present disclosure is schematic, and is only a logical function division, and there may be other division manners in actual implementation. The following description takes the division of each functional module for the corresponding function as an example for explanation.

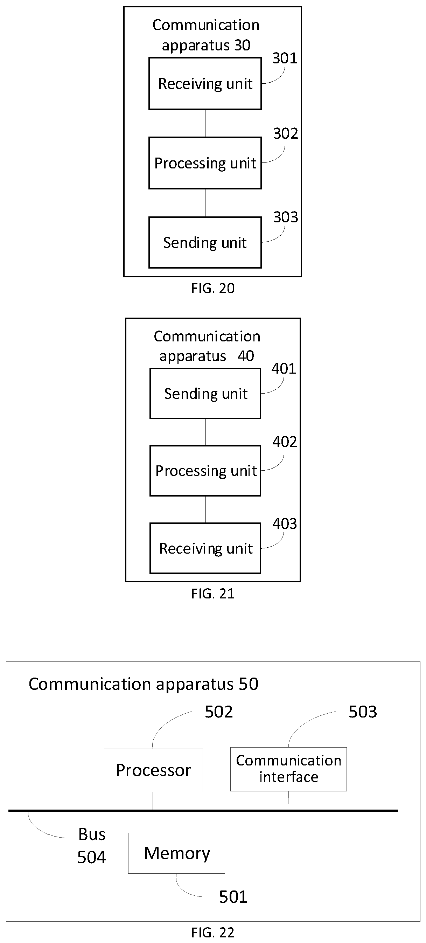

FIG. 20 is a schematic composition diagram of a communication apparatus provided by embodiments of the present disclosure. As shown in FIG. 20, the communication apparatus 30 includes a receiving unit 301 and a processing unit 302. In some embodiments, the communication apparatus 30 further includes a sending unit 303.

The communication apparatus 30 may be the above first node or a chip in the first node. When the communication apparatus 30 is configured to implement the functions of the first node in the above embodiments, each unit is specifically configured to implement the following functions.

The receiving unit 301 is configured to receive configuration information of a first reference signal; and the processing unit 302 is configured to process the first reference signal based on the configuration information of the first reference signal.

In some embodiments, the configuration information of the first reference signal includes a position of a resource element of the first reference signal, and the resource element includes a first resource element and a second resource element.

In some embodiments, the first reference signal is a DMRS.

In some embodiments, the first resource element is used for carrying a non-zero-power first reference signal, and the second resource element is used for carrying a zero-power first reference signal; or, the first resource element and the second resource element are used for carrying the non-zero-power first reference signal; or, the first resource element is used for transmitting a data channel and the first reference signal, and the second resource element is used for transmitting the first reference signal; or, a port corresponding to the first resource element is the same as a port corresponding to a data channel, and a port corresponding to the second resource element is different from the port corresponding to the data channel; or, a position of the second resource element is a subset of a position of the first resource element; or, the position of the second resource element does not overlap with the position of the first resource element; or, the position of the first resource element and the position of the second resource element are consecutive in a time domain or consecutive in a frequency domain; or, the number of the second resource elements is determined according to the number of the first resource elements; or, a sum of the number of the second resource elements and the number of the first resource elements is a specific value; or, the number of the second resource elements is proportional to the number of the first resource elements.

In some embodiments, the configuration information of the first reference signal includes a first parameter and a second parameter, the first parameter is used for determining the position of the first resource element, and the second parameter is used for determining the position of the second resource element.

In some embodiments, the position of the second resource element is determined according to the second parameter and the first parameter; or, the second parameter is associated with the first parameter.

In some embodiments, the configuration information of the first reference signal includes a third parameter and a fourth parameter, the third parameter is used for indicating the position of the resource element of the first reference signal, and the fourth parameter is used for indicating the position of the first resource element or the position of the second resource element.

In some embodiments, the configuration information of the first reference signal includes a fifth parameter and a sixth parameter, the fifth parameter is used for indicating the position of the resource element of the first reference signal, and the sixth parameter is used for indicating at least one of the following of the first reference signal: a function, a usage, or a type.

In some embodiments, an offset exists between power of the first resource element and power of the second resource element; or, the power of the second resource element is obtained according to the power of the first resource element; or, the power of the first resource element is associated with the power of the second resource element.

In some embodiments, the configuration information of the first reference signal includes a pattern of the first reference signal, and the pattern of the first reference signal is used for indicating a position of a resource element of the first reference signal.

In some embodiments, the pattern of the first reference signal includes a first pattern and/or a second pattern; a position of a resource element of the first pattern is used for transmitting a data channel and the first reference signal, and a position of a resource element of the second pattern is used for transmitting the first reference signal; or, the first pattern and the second pattern are used for carrying a non-zero-power first reference signal; or, the first pattern is used for transmitting the data channel and the first reference signal, and the second pattern is used for transmitting the first reference signal; or, a position of a second resource element determined by the second pattern is a subset of a first resource element determined by the first pattern; or, the position of the second resource element determined by the second pattern does not overlap with a position of the first resource element determined by the first pattern; or, the position of the first resource element determined by the first pattern and the position of the second resource element determined by the second pattern are consecutive in a time domain or consecutive in a frequency domain.

In some embodiments, the receiving unit 301 is further configured to receive first indication information. The first indication information is used for activating or deactivating the pattern of the first reference signal; or, the first indication information is used for activating, deactivating, or determining a resource element subset of the pattern of the first reference signal; or, the first indication information is used for activating, deactivating, or determining signal transmission or channel transmission based on the pattern of the first reference signal; or, the pattern of the first reference signal includes multiple patterns, and the first indication information is used for activating, deactivating, or determining at least one pattern among the patterns of the first reference signal.

In some embodiments, the processing unit 302 is further configured to determine a pattern of a second reference signal according to the pattern of the first reference signal; or, the receiving unit 301 is further configured to receive second indication information, wherein the second indication information is used for determining the pattern of the second reference signal.

In some embodiments, the configuration information of the first reference signal includes second indication information.

In some embodiments, the pattern of the second reference signal is a subset of the pattern of the first reference signal; or, the pattern of the first reference signal is a subset of the pattern of the second reference signal; or, the pattern of the first reference signal and the pattern of the second reference signal partially overlap, or are consecutive in a time domain, or are consecutive in a frequency domain; or, the pattern of the first reference signal is associated with the pattern of the second reference signal.

In some embodiments, the first reference signal or the second reference signal is used for at least one of the following: training, monitoring, inference, data transmission or reception, control channel transmission, reception or detection, or measurement.

In some embodiments, the configuration information of the reference signal includes third indication information, and the third indication information is used for indicating at least one of the following: a starting position of the first reference signal, a frequency-domain interval, a time-domain interval, a sequence length of the first reference signal, a sequence type of the first reference signal, the number of time-domain resources of the first reference signal, or the number of frequency-domain resources of the first reference signal; wherein the starting position of the first reference signal includes a frequency-domain starting position and a time-domain starting position.

In some embodiments, the third indication information includes at least one of the following: first bitmap information, wherein the first bitmap information is used for indicating the frequency-domain starting position, the frequency-domain interval, and the number of the frequency-domain resources; second bitmap information, wherein the second bitmap information is used for indicating the time-domain starting position, the time-domain interval, and the number of the time-domain resources; or pattern index indication information.

In some embodiments, the position of the resource element of the first reference signal or the pattern of the first reference signal is determined based on at least one of the following: a time-domain resource; a frequency-domain resource; a subcarrier interval; a frequency point position; carrier information; cell information; a time-domain position; antenna port information; a transmission manner of a data channel; whether data is transmitted on the position of the resource element of the first reference signal; a usage of the first reference signal, wherein the usage includes training, monitoring or inference; or a first specific condition.

In some embodiments, the first specific condition is based on at least one of the following: a threshold value; a parameter value; mobility; stationary; a non-acknowledgement (NACK) message; activation signaling or deactivation signaling; or a timer.

In some embodiments, processing the first reference signal further requires at least one of the following information: a movement speed, a modulation manner, a carrier frequency, a subcarrier interval, a bandwidth, antenna information, scenario information, a near field, a far field, an integrated type, multiple-input multiple-output (MIMO), the number of MIMO layers, a reconfigurable intelligent surface (RIS) parameter, a sequence, subband information, or scheduling information.

In some embodiments, the at least one of the information is transmitted based on at least one of the following: radio resource control (RRC) signaling, medium access control control element (MAC CE) signaling, downlink control information (DCI), a low power wake-up signal (LP-WUS), a physical downlink shared channel (PDSCH), or system information (SI); or, the at least one of the information is transmitted through the configuration information of the first reference signal.

In some embodiments, the processing unit 302 is further configured to obtain information of a third reference signal according to the first reference signal.

The sending unit 303 is configured to send the information of the third reference signal.

In some embodiments, the information of the third reference signal includes at least one of the following: a pattern of the third reference signal, a time-frequency domain resource position, a frequency point, a frequency band, a port, a beam, the number of resource elements of the third reference signal, or positions of the resource elements of the third reference signal.

In some embodiments, the sending unit 303 is further configured to send information of a downlink reference signal according to processing of the first reference signal.

In some embodiments, the information of the downlink reference signal includes at least one of the following: selection information of the downlink reference signal, pattern information of the downlink reference signal, auxiliary information of the downlink reference signal, position information of a resource element of the downlink reference signal, type information of the downlink reference signal, or a rollback indication of the downlink reference signal.

In some embodiments, the sending unit 303 is specifically configured to send information of a downlink reference signal based on a first transmission manner, and the first transmission manner includes at least one of the following: medium access control (MAC) signaling, the RRC signaling, the physical uplink control channel (PUCCH), the uplink control information (UCI), or the physical random access channel (PRACH).

In some embodiments, the first reference signal includes a fourth reference signal and a fifth reference signal.

In some embodiments, the fourth reference signal and the fifth reference signal are uplink reference signals, and the first node performs uplink transmission or sending based on the fourth reference signal or the fifth reference signal.

In some embodiments, the fourth reference signal and the fifth reference signal are downlink reference signals or uplink reference signals, and the first node determines, based on fourth indication information or a second specific condition, that the first reference signal is the fourth reference signal or the fifth reference signal.

In some embodiments, the fourth indication information includes at least one of the following: DCI, MAC CE signaling, or an LP-WUS. The second specific condition is based on at least one of the following: a threshold value; a parameter value; mobility; a stationary state; feedback of a NACK message; receiving of deactivation signaling; or a timer.

In some embodiments, the configuration information of the first reference signal includes first configuration information and second configuration information.

In some embodiments, the first configuration information and the second configuration information satisfy at least one of the following: during a validity period of the first configuration information, triggering the second configuration information to become valid in a case where a third specific condition is satisfied; or, during the validity period of the first configuration information, processing the first reference signal according to the second configuration information in the case where the third specific condition is satisfied; or, during the validity period of the first configuration information, deactivating the first configuration information and activating the second configuration information in the case where the third specific condition is satisfied; or, determining, through a signaling indication or activation signaling, to process the first reference signal according to the first configuration information or the second configuration information.

In some embodiments, the third specific condition includes at least one of the following: second signaling is received, wherein the second signaling includes at least one of the following: MAC CE signaling, RRC signaling, DCI, or system information (SI); a timer expires; NACK information is fed back; or a specific indicator or a threshold value is not satisfied.

In some embodiments, the first configuration information includes at least one of the following: a third pattern of the first reference signal; a configuration in a specific mode; or a configuration of a first DMRS; and the second configuration information includes at least one of the following: a fourth pattern of the first reference signal; a default configuration or a predefined configuration or a higher-layer configuration; or a configuration of a second DMRS.

FIG. 21 is a schematic composition diagram of a communication apparatus provided by embodiments of the present disclosure. As shown in FIG. 21, the communication apparatus 40 includes a sending unit 401 and a processing unit 402. In some embodiments, the communication apparatus 40 further includes a receiving unit 403.

The communication apparatus 40 may be the above second node or a chip in the second node. When the communication apparatus 40 is configured to implement the functions of the second node in the above embodiments, each unit is specifically configured to implement the following functions.

The sending unit 401 is configured to send configuration information of a first reference signal; and the processing unit 402 is configured to process the first reference signal based on the configuration information of the first reference signal.

In some embodiments, the configuration information of the first reference signal includes a position of a resource element of the first reference signal, and the resource element includes a first resource element and a second resource element.

In some embodiments, the first reference signal is a demodulation reference signal (DMRS).

In some embodiments, the first resource element is used for carrying a non-zero-power first reference signal, and the second resource element is used for carrying a zero-power first reference signal; or, the first resource element and the second resource element are used for carrying the non-zero-power first reference signal; or, the first resource element is used for transmitting a data channel and the first reference signal, and the second resource element is used for transmitting the first reference signal; or, a port corresponding to the first resource element is the same as a port corresponding to a data channel, and a port corresponding to the second resource element is different from the port corresponding to the data channel; or, a position of the second resource element is a subset of a position of the first resource element; or, the position of the second resource element does not overlap with the position of the first resource element; or, the position of the first resource element and the position of the second resource element are consecutive in a time domain or consecutive in a frequency domain; or, the number of the second resource elements is determined according to the number of the first resource elements; or, a sum of the number of the second resource elements and the number of the first resource elements is a specific value; or, the number of the second resource elements is proportional to the number of the first resource elements.

In some embodiments, the configuration information of the first reference signal includes a first parameter and a second parameter, the first parameter is used for determining the position of the first resource element, and the second parameter is used for determining the position of the second resource element.

In some embodiments, the position of the second resource element is determined according to the second parameter and the first parameter; or, the second parameter is associated with the first parameter.

In some embodiments, the configuration information of the first reference signal includes a third parameter and a fourth parameter, the third parameter is used for indicating the position of the resource element of the first reference signal, and the fourth parameter is used for indicating the position of the first resource element or the position of the second resource element.

In some embodiments, the configuration information of the first reference signal includes a fifth parameter and a sixth parameter, the fifth parameter is used for indicating the position of the resource element of the first reference signal, and the sixth parameter is used for indicating at least one of the following of the first reference signal: a function, a usage, or a type.

In some embodiments, an offset exists between power of the first resource element and power of the second resource element; or, the power of the second resource element is obtained according to the power of the first resource element; or, the power of the first resource element is associated with the power of the second resource element.

In some embodiments, the configuration information of the first reference signal includes a pattern of the first reference signal, and the pattern of the first reference signal is used for indicating a position of a resource element of the first reference signal.

In some embodiments, the pattern of the first reference signal includes a first pattern and/or a second pattern; a position of a resource element of the first pattern is used for transmitting a data channel and the first reference signal, and a position of a resource element of the second pattern is used for transmitting the first reference signal; or, the first pattern and the second pattern are used for carrying a non-zero-power first reference signal; or, the first pattern is used for transmitting the data channel and the first reference signal, and the second pattern is used for transmitting the first reference signal; or, a position of a second resource element determined by the second pattern is a subset of a first resource element determined by the first pattern; or, the position of the second resource element determined by the second pattern does not overlap with a position of the first resource element determined by the first pattern; or, the position of the first resource element determined by the first pattern and the position of the second resource element determined by the second pattern are consecutive in a time domain or consecutive in a frequency domain.

In some embodiments, the sending unit 401 is further configured to send first indication information. The first indication information is used for activating or deactivating the pattern of the first reference signal; or, the first indication information is used for activating, deactivating, or determining a resource element subset of the pattern of the first reference signal; or, the first indication information is used for activating, deactivating, or determining signal transmission or channel transmission based on the pattern of the first reference signal; or, the pattern of the first reference signal includes multiple patterns, and the first indication information is used for activating, deactivating, or determining at least one pattern among the patterns of the first reference signal.

In some embodiments, the sending unit 401 is further configured to send second indication information, wherein the second indication information is used for determining a pattern of a second reference signal.

In some embodiments, the configuration information of the first reference signal includes second indication information.

In some embodiments, the pattern of the second reference signal is a subset of the pattern of the first reference signal; or, the pattern of the first reference signal is a subset of the pattern of the second reference signal; or, the pattern of the first reference signal and the pattern of the second reference signal partially overlap, or are consecutive in a time domain, or are consecutive in a frequency domain; or, an association relationship exists between the pattern of the first reference signal and the pattern of the second reference signal.

In some embodiments, the first reference signal or the second reference signal is used for at least one of the following: training, monitoring, inference, data transmission or reception, control channel transmission, reception, or detection, or measurement.

In some embodiments, the configuration information of the reference signal includes third indication information, and the third indication information is used for indicating at least one of the following: a starting position of the first reference signal, a frequency-domain interval, a time-domain interval, a sequence length of the first reference signal, a sequence type of the first reference signal, a number of time-domain resources of the first reference signal, or a number of frequency-domain resources of the first reference signal; wherein the starting position of the first reference signal includes a frequency-domain starting position and a time-domain starting position.

In some embodiments, the third indication information includes at least one of the following: first bitmap information, wherein the first bitmap information is used for indicating the frequency-domain starting position, the frequency-domain interval, and the number of the frequency-domain resources; second bitmap information, wherein the second bitmap information is used for indicating the time-domain starting position, the time-domain interval, and the number of the time-domain resources; or pattern index indication information.

In some embodiments, the position of the resource element of the first reference signal or the pattern of the first reference signal is determined based on at least one of the following: a subcarrier interval; a frequency point position; a carrier; a cell; a time node; a number of antenna ports; an antenna port number; an antenna port type; a transmission manner of a data channel; whether data is transmitted on the position of the resource element of the first reference signal; a usage of the first reference signal, wherein the usage includes training, monitoring or inference; or a first specific condition.

In some embodiments, the first specific condition is based on at least one of the following: a threshold value; a parameter value; mobility; stationary; a non-acknowledgement (NACK) message; activation signaling or deactivation signaling; or a timer.

In some embodiments, processing the first reference signal further requires at least one of the following information: a movement speed, a modulation manner, a carrier frequency, a subcarrier interval, a bandwidth, antenna information, scenario information, a near field, a far field, an integrated type, multiple-input multiple-output (MIMO), the number of MIMO layers, a reconfigurable intelligent surface (RIS) parameter, a sequence, subband information, or scheduling information.

In some embodiments, the at least one of the information is transmitted based on at least one of the following: radio resource control (RRC) signaling, medium access control control element (MAC CE) signaling, downlink control information (DCI), a low power wake-up signal (LP-WUS), a physical downlink shared channel (PDSCH), or system information (SI); or, the at least one of the information is transmitted through the configuration information of the first reference signal.

In some embodiments, the receiving unit 403 is configured to receive information of a third reference signal, wherein the information of the third reference signal is obtained based on the first reference signal.

In some embodiments, the information of the third reference signal includes at least one of the following: a pattern of the third reference signal, a time-frequency domain resource position, a frequency point, a frequency band, a port, a beam, the number of resource elements of the third reference signal, or positions of the resource elements of the third reference signal.

In some embodiments, the receiving unit 403 is further configured to receive information of a downlink reference signal, wherein the information of the downlink reference signal is obtained according to processing of the first reference signal.

In some embodiments, the information of the downlink reference signal includes at least one of the following: selection information of the downlink reference signal, pattern information of the downlink reference signal, auxiliary information of the downlink reference signal, position information of a resource element of the downlink reference signal, type information of the downlink reference signal, or a rollback indication of the downlink reference signal.

In some embodiments, the information of the downlink reference signal is sent based on a first transmission manner, and the first transmission manner includes at least one of the following: medium access control (MAC) signaling, the RRC signaling, the physical uplink control channel (PUCCH), the uplink control information (UCI), or the physical random access channel (PRACH).

In some embodiments, the first reference signal includes a fourth reference signal and a fifth reference signal.

In some embodiments, the fourth reference signal and the fifth reference signal are uplink reference signals, and the first node performs uplink transmission or sending based on the fourth reference signal or the fifth reference signal.

In some embodiments, the fourth reference signal and the fifth reference signal are downlink reference signals or uplink reference signals, and the first node determines, based on fourth indication information or a second specific condition, that the first reference signal is the fourth reference signal or the fifth reference signal.

In some embodiments, the fourth indication information includes at least one of the following: DCI, MAC CE signaling, or an LP-WUS. The second specific condition is based on at least one of the following: a threshold value; a parameter value; mobility; a stationary state; feedback of a NACK message; receiving of deactivation signaling; or a timer.

In some embodiments, the configuration information of the first reference signal includes first configuration information and second configuration information.

In some embodiments, the first configuration information and the second configuration information satisfy at least one of the following: during a validity period of the first configuration information, triggering the second configuration information to become valid in a case where a third specific condition is satisfied; or, during the validity period of the first configuration information, processing the first reference signal according to the second configuration information in the case where the third specific condition is satisfied; or, during the validity period of the first configuration information, deactivating the first configuration information and activating the second configuration information in the case where the third specific condition is satisfied; or, determining, through a signaling indication or activation signaling, to process the first reference signal according to the first configuration information or the second configuration information.

In some embodiments, the third specific condition includes at least one of the following: second signaling is received, wherein the second signaling includes at least one of the following: MAC CE signaling, RRC signaling, DCI, or system information (SI); a timer expires; NACK information is fed back; or a specific indicator or a threshold value is not satisfied.

In some embodiments, the first configuration information includes at least one of the following: a third pattern of the first reference signal; a configuration in a specific mode; or a configuration of a first DMRS; and the second configuration information includes at least one of the following: a fourth pattern of the first reference signal; a default configuration or a predefined configuration or a higher-layer configuration; or a configuration of a second DMRS.

It should be noted that the units in FIG. 20 and FIG. 21 may also be referred to as modules. For example, the sending unit may be referred to as a sending module. In addition, in the embodiments shown in FIG. 20 and FIG. 21, the names of the units are not limited to those shown in the figures. For example, the sending unit may also be referred to as a communication unit, and the receiving unit may also be referred to as a communication unit.

The units in FIG. 20 and FIG. 21, if implemented in the form of software functional modules and sold or used as independent products, may be stored in a computer-readable storage medium. Based on this understanding, the technical solutions of the embodiments of the present disclosure essentially, or parts contributing to the prior art, or all or part of the technical solutions can be embodied in a software product form. A computer software product is stored in a storage medium, including a plurality of instructions configured to cause a computer device (may be a personal computer, a server, a network device, etc.) or a processor to perform all or part of the steps of the methods in all the embodiments of the present disclosure. The storage medium storing the computer software product includes: a USB flash drive, a removable hard disk, a read-only memory (ROM), a random access memory (RAM), a magnetic disk, or an optical disk, and other media that can store program codes.

In a case where the above communication apparatus 30 or communication apparatus 40 implements the functions of the above integrated modules in the form of hardware, an embodiment of the present disclosure provides a schematic structural diagram of a communication apparatus. As shown in FIG. 22, the communication apparatus 50 includes: a processor 502, a communication interface 503, and a bus 504. In one embodiment, the communication apparatus 50 may further include a memory 501.

The processor 502 may implement or execute various exemplary logic blocks, modules and circuits described in combination with the contents disclosed in the present disclosure. The processor 502 may be a central processing unit, a general-purpose processor, a digital signal processor, an application-specific integrated circuit, a field-programmable gate array, or other programmable logic devices, transistor logic devices, hardware components, or any combination thereof. The processor may implement or execute various exemplary logic blocks, modules and circuits described in combination with the contents disclosed in the present disclosure. The processor 502 may also be a combination implementing a computing function, for example, a combination containing one or more microprocessors, a combination of DSP and the microprocessor, etc.

The communication interface 503 is configured to connect to other devices via a communication network. The communication network may be Ethernet, a radio access network, a wireless local area network (WLAN), or the like.

The memory 501 may be a read-only memory (ROM) or other types of static storage devices capable of storing static information and instructions, may be a random access memory (RAM) or other types of dynamic storage devices capable of storing information and instructions, may also be an electrically erasable programmable read-only memory (EEPROM), a magnetic disk storage medium or other magnetic storage devices, or any other media that can be configured to carry or store desired program code in the form of instructions or data structures and that can be accessed by a computer, but is not limited thereto.

As a possible implementation, the memory 501 may exist independently of the processor 502, and the memory 501 may be connected to the processor 502 via the bus 504 for storing instructions or program codes. The processor 502, when invoking and executing the instructions or program codes stored in the memory 501, can implement the communication method provided in the embodiments of the present disclosure.

In another possible implementation, the memory 501 may also be integrated with the processor 502.

The bus 504 may be an extended industry standard architecture (EISA) bus or the like. The bus 504 may be divided into an address bus, a data bus, a control bus, and the like. For facilitating representation, the bus is only represented with a thick line in FIG. 22, but it does not represent that there is only one bus or any type of buses.

From the description of the above implementations, those skilled in the art can clearly understand that, for the convenience and brevity of description, only the division of the above functional modules is used as an example for illustration. In actual applications, the above functions may be allocated to different functional modules to be completed as needed. That is, an internal structure of the base station or the terminal may be divided into different functional modules to complete all or part of the functions described above.

An embodiment of the present disclosure further provides a computer-readable storage medium. All or part of the processes in the above method embodiments may be completed by related hardware instructed by computer instructions. The program may be stored in the above computer-readable storage medium, and the program, when executed, may include the processes of the above method embodiments. The computer-readable storage medium may be an internal memory of any of the foregoing embodiments. The above computer-readable storage medium may also be an external storage device of the above first node or second node, for example, a plug-in hard disk, a smart media card (SMC), a secure digital (SD) card, a flash card, or the like, equipped on the above first node or second node. Further, the above computer-readable storage medium may also include both the internal storage unit of the above first node or second node and the external storage device. The above computer-readable storage medium is configured to store the above computer program and other programs and data required by the above first node or second node. The above computer-readable storage medium may further be used for temporarily store data that has been or will be outputted.

An embodiment of the present disclosure further provides a computer program product, the computer product contains a computer program, and the computer program product, when running on a computer, causes the computer to perform any one of the communication methods provided in the above embodiments.

Although the present disclosure is described herein in conjunction with various embodiments, those skilled in the art may, in a process of practicing the claimed present disclosure, understand and implement other variations of the disclosed embodiments by viewing the accompanying drawings, the disclosed content, and the appended claims. In the claims, the word "comprising" does not exclude other components or steps, and "a" or "an" does not exclude a plurality. A single processor or other units may implement several functions recited in the claims. The fact that certain measures are recorded in mutually different dependent claims does not indicate that these measures cannot be combined to produce a good effect.

Although the present disclosure is described in conjunction with specific features and embodiments thereof, it is evident that various modifications and combinations may be made thereto without departing from the spirit and scope of the present disclosure. Accordingly, the present specification and the accompanying drawings are merely exemplary illustrations of the present disclosure as defined by the appended claims, and are deemed to cover any and all modifications, variations, combinations, or equivalents within the scope of the present disclosure. Apparently, those skilled in the art can make various modifications and variations to the present disclosure without departing from the spirit and scope of the present disclosure. In this way, if these modifications and variations of the present disclosure fall within the scope of the claims of the present disclosure and equivalent technologies thereof, the present disclosure is also intended to include these modifications and variations.

The above are merely specific implementations of the present disclosure, but the scope of protection of the present disclosure is not limited thereto. Any changes or substitutions within the technical scope disclosed in the present disclosure should be covered by the scope of protection of the present disclosure. Therefore, the scope of protection of the present disclosure needs to be subjected to the scope of protection of the claims.

## Claims

1. A communication method, performed by a first node, comprising:
receiving configuration information of a first reference signal; and
processing the first reference signal based on the configuration information of the first reference signal.

2. The method according to claim 1, wherein the configuration information of the first reference signal comprises a position of a resource element of the first reference signal, and the resource element comprises a first resource element and a second resource element.

3. The method according to claim 1 or 2, wherein the first reference signal is a demodulation reference signal called DMRS.

4. The method according to claim 2, wherein
the first resource element is used for carrying a non-zero-power first reference signal, and the second resource element is used for carrying a zero-power first reference signal; or,
the first resource element and the second resource element are used for carrying a non-zero-power first reference signal; or,
the first resource element is used for transmitting a data channel and the first reference signal, and the second resource element is used for transmitting the first reference signal; or,
a port corresponding to the first resource element is the same as a port corresponding to a data channel, and a port corresponding to the second resource element is different from the port corresponding to the data channel; or,
a position of the second resource element is determined according to a position of the first resource element; or,
the position of the second resource element is a subset of the position of the first resource element; or,
the position of the second resource element does not overlap with the position of the first resource element; or,
the position of the first resource element and the position of the second resource element are consecutive in a time domain or consecutive in a frequency domain; or,
a number of the second resource elements is determined according to a number of the first resource elements; or,
a sum of the number of the second resource elements and the number of the first resource elements is a specific value; or,
the number of the second resource elements is proportional to the number of the first resource elements.

5. The method according to claim 2, wherein the configuration information of the first reference signal comprises a first parameter and a second parameter, the first parameter is used for determining a position of the first resource element, and the second parameter is used for determining a position of the second resource element.

6. The method according to claim 5, wherein
the position of the second resource element is determined according to the second parameter and the first parameter; or
the second parameter is associated with the first parameter.

7. The method according to claim 2, wherein the configuration information of the first reference signal comprises a third parameter and a fourth parameter, the third parameter is used for indicating the position of the resource element of the first reference signal, and the fourth parameter is used for indicating a position of the first resource element or a position of the second resource element.

8. The method according to claim 2, wherein the configuration information of the first reference signal comprises a fifth parameter and a sixth parameter, the fifth parameter is used for indicating the position of the resource element of the first reference signal, and the sixth parameter is used for indicating at least one of the following of the first reference signal: a function, a usage, or a type.

9. The method according to claim 2 or 4, wherein
an offset exists between power of the first resource element and power of the second resource element; or,
the power of the second resource element is obtained according to the power of the first resource element; or,
the power of the first resource element is associated with the power of the second resource element.

10. The method according to claim 1, wherein the configuration information of the first reference signal comprises a pattern of the first reference signal, and the pattern of the first reference signal is used for indicating a position of a resource element of the first reference signal.

11. The method according to claim 10, wherein the pattern of the first reference signal comprises a first pattern and/or a second pattern;
a position of a resource element of the first pattern is used for transmitting a data channel and the first reference signal, and a position of a resource element of the second pattern is used for transmitting the first reference signal; or,
the first pattern and the second pattern are used for carrying a non-zero-power first reference signal; or,
the first pattern is used for transmitting the data channel and the first reference signal, and the second pattern is used for transmitting the first reference signal; or,
a position of a second resource element determined by the second pattern is a subset of a first resource element determined by the first pattern; or,
the position of the second resource element determined by the second pattern does not overlap with a position of the first resource element determined by the first pattern; or,
the position of the first resource element determined by the first pattern and the position of the second resource element determined by the second pattern are consecutive in a time domain or consecutive in a frequency domain.

12. The method according to claim 10, further comprising:
receiving first indication information, wherein the first indication information is used for activating or deactivating the pattern of the first reference signal; or,
the first indication information is used for activating, deactivating, or determining a resource element subset of the pattern of the first reference signal; or,
the first indication information is used for activating, deactivating, or determining signal transmission or channel transmission based on the pattern of the first reference signal; or,
the pattern of the first reference signal comprises multiple patterns, and the first indication information is used for activating, deactivating, or determining at least one pattern among the patterns of the first reference signal.

13. The method according to claim 10, further comprising:
determining a pattern of a second reference signal according to the pattern of the first reference signal; or,
receiving second indication information, wherein the second indication information is used for determining the pattern of the second reference signal.

14. The method according to claim 13, wherein the configuration information of the first reference signal comprises the second indication information.

15. The method according to claim 13, wherein
the pattern of the second reference signal is a subset of the pattern of the first reference signal; or,
the pattern of the first reference signal is a subset of the pattern of the second reference signal; or,
the pattern of the first reference signal and the pattern of the second reference signal partially overlap, or are consecutive in a time domain, or are consecutive in a frequency domain; or,
the pattern of the first reference signal is associated with the pattern of the second reference signal.

16. The method according to claim 13, wherein the first reference signal or the second reference signal is used for at least one of the following: training, monitoring, inference, data transmission or reception, control channel transmission, reception or detection, or measurement.

17. The method according to claim 1, wherein the configuration information of the first reference signal comprises third indication information, and the third indication information is used for indicating at least one of the following:
a starting position of the first reference signal, a frequency-domain interval, a time-domain interval, a sequence length of the first reference signal, a sequence type of the first reference signal, a number of time-domain resources of the first reference signal, or a number of frequency-domain resources of the first reference signal; wherein the starting position of the first reference signal comprises a frequency-domain starting position and a time-domain starting position.

18. The method according to claim 17, wherein the third indication information comprises at least one of the following:
first bitmap information, wherein the first bitmap information is used for indicating the frequency-domain starting position, the frequency-domain interval, and the number of the frequency-domain resources;
second bitmap information, wherein the second bitmap information is used for indicating the time-domain starting position, the time-domain interval, and the number of the time-domain resources; or
pattern index indication information.

19. The method according to claim 1, wherein a position of a resource element of the first reference signal or a pattern of the first reference signal is determined based on at least one of the following:
a time-domain resource;
a frequency-domain resource;
a subcarrier interval;
a frequency point position;
carrier information;
cell information;
a time-domain position;
antenna port information;
a transmission manner of a data channel;
whether data is transmitted on the position of the resource element of the first reference signal;
a usage of the first reference signal, wherein the usage comprises training, monitoring or inference; or
a first specific condition.

20. The method according to claim 19, wherein the first specific condition is based on at least one of the following:
a threshold value;
a parameter value;
mobility;
stationary;
a non-acknowledgement called NACK message;
activation signaling or deactivation signaling; or
a timer.

21. The method according to claim 1, wherein processing the first reference signal further requires at least one of the following information: a movement speed, a modulation manner, a carrier frequency, a subcarrier interval, a bandwidth, antenna information, scenario information, a near field, a far field, an integrated type, multiple-input multiple-output called MIMO, a number of MIMO layers, a reconfigurable intelligent surface called RIS parameter, a sequence, subband information, or scheduling information.

22. The method according to claim 21, wherein
the at least one of the information is transmitted based on at least one of the following: radio resource control called RRC signaling, medium access control control element called MAC CE signaling, downlink control information called DCI, a low power wake-up signal called LP-WUS, a physical downlink shared channel called PDSCH, or system information called SI); or,
the at least one of the following information is transmitted through the configuration information of the first reference signal.

23. The method according to claim 1, further comprising:
obtaining information of a third reference signal according to the first reference signal; and
sending the information of the third reference signal.

24. The method according to claim 23, wherein the information of the third reference signal comprises at least one of the following:
a pattern of the third reference signal, a time-frequency domain resource position, a frequency point, a frequency band, a port, a beam, a number of resource elements of the third reference signal, or a position of a resource element of the third reference signal.

25. The method according to claim 1, further comprising:
sending information of a downlink reference signal according to processing of the first reference signal.

26. The method according to claim 25, wherein
the information of the downlink reference signal comprises at least one of the following: selection information of the downlink reference signal, pattern information of the downlink reference signal, auxiliary information of the downlink reference signal, position information of a resource element of the downlink reference signal, type information of the downlink reference signal, or a rollback indication of the downlink reference signal.

27. The method according to claim 25, wherein sending the information of the downlink reference signal comprises:
sending the information of the downlink reference signal based on a first transmission manner, wherein the first transmission manner comprises at least one of the following:
medium access control called MAC signaling, RRC signaling, a physical uplink control channel called PUCCH, uplink control information called UCI, or a physical random access channel called PRACH.

28. The method according to claim 1, wherein the first reference signal comprises a fourth reference signal and a fifth reference signal.

29. The method according to claim 28, wherein the fourth reference signal and the fifth reference signal are uplink reference signals, and the first node performs uplink transmission or sending based on the fourth reference signal or the fifth reference signal.

30. The method according to claim 28, wherein the fourth reference signal and the fifth reference signal are downlink reference signals or uplink reference signals, and the first node determines, based on fourth indication information or a second specific condition, that the first reference signal is the fourth reference signal or the fifth reference signal.

31. The method according to claim 30, wherein the fourth indication information comprises at least one of the following:
DCI, MAC CE signaling, or an LP-WUS; or
the second specific condition is based on at least one of the following:
a threshold value;
a parameter value;
mobility;
a stationary state;
feedback of a NACK message;
activation signaling or deactivation signaling; or
a timer.

32. The method according to claim 1, wherein the configuration information of the first reference signal comprises first configuration information and second configuration information.

33. The method according to claim 32, wherein the first configuration information and the second configuration information satisfy at least one of the following:
during a validity period of the first configuration information, triggering the second configuration information to become valid in a case where a third specific condition is satisfied; or,
during the validity period of the first configuration information, processing the first reference signal according to the second configuration information in the case where the third specific condition is satisfied; or,
during the validity period of the first configuration information, deactivating the first configuration information and activating the second configuration information in the case where the third specific condition is satisfied; or,
determining, through a signaling indication or activation signaling, to process the first reference signal according to the first configuration information or the second configuration information.

34. The method according to claim 33, wherein the third specific condition comprises at least one of the following:
second signaling is received, wherein the second signaling comprises at least one of the following: MAC CE signaling, RRC signaling, DCI, or system information called SI;
a timer expires;
NACK information is fed back; or
a specific indicator or a threshold value is not satisfied.

35. The method according to claim 32, wherein the first configuration information comprises at least one of the following:
a third pattern of the first reference signal;
a configuration in a specific mode; or
a configuration of a first DMRS; and
the second configuration information comprises at least one of the following:
a fourth pattern of the first reference signal;
a default configuration or a predefined configuration or a higher-layer configuration; or
a configuration of a second DMRS.

36. A communication method, performed by a second node, comprising:
sending configuration information of a first reference signal; and
processing the first reference signal based on the configuration information of the first reference signal.

37. A communication apparatus, comprising: a memory and a processor; wherein the memory and the processor are coupled; the memory is configured to store processor-executable instructions; and the processor, when executing the instructions, performs the method according to any one of claims 1 to 36.

38. A computer-readable storage medium, wherein the computer readable storage medium stores computer instructions, and the computer instructions, when running on a computer, cause the computer to perform the method according to any one of claims 1 to 36.
